# EUROPEAN PATENT SPECIFICATION

(11) **EP 1 741 359 B1**
(45) Date of publication and mention of the grant of the patent: **15.12.2010**
(21) Application number: 05721467.8
(22) Date of filing: 25.03.2005
(51) Int. Cl.: A44C 17/00

(54) **OVAL CUT DIAMOND**
DIAMANT MIT OVALEM SCHNITT
DIAMANT COUPÉ OVALE

(30) Priority: 09.04.2004 JP 2004115084
(43) Date of publication of application: 10.01.2007
(73) Proprietor: Hohoemi Brains, Inc., Taito-ku Tokyo 110-0005 (JP)
(72) Inventor: MATSUMURA, Tamotsu, Ayase-shi, Kanagawa 252-1137 (JP); KAWABUCHI, Yoshinori, c/o HOHOEMI BRAINS, INC., Tokyo 110-0005 (JP); ITOH, Akira, c/o HOHOEMI BRAINS, INC., Tokyo 110-0005 (JP)
(74) Representative: Howe, Steven
(86) International application number: PCT/JP2005/005490
(87) International publication number: WO 2005/096866

(56) References cited:
- WO-A-02/27075
- JP-A- 2000 325 114
- JP-A- 2002 136 314
- JP-A- 2003 310 318
- JP-U- 3 056 360

## Description

### TECHNICAL FIELD

The present invention relates to a cut of diamond, and in particular to a cut of diamond having an oval girdle that emits an enhanced brilliancy of reflection lights.

### BACKGROUND ART

As a cut of diamond, a round brilliant cut is generally used. A round brilliant cut diamond has a table facet of a regular octagon on a top of a crown, and eight crown main facets, eight star facets and sixteen upper girdle facets on an outer circumference of the crown between the table facet and a girdle. The diamond further has a culet at an apex below the girdle, and eight pavilion main facets and sixteen lower girdle facets on an outer circumference of a pavilion between the culet and the girdle. So, the round brilliant cut is generally called a 58-facet solid, including the table facet and the culet. And, the round brilliant cut is eight times symmetrical with respect to a central axis.

The present inventors introduced "amount of visual-perceptible reflection rays" for a round brilliant cut diamond, invented a cut design of the diamond enhancing the amount of visual-perceptible reflection rays to evaluate brilliancy that people can perceive when they observe diamonds, and applied it for patent. That has been published as Patent Document 1 (see below).

In the above-mentioned patent application about a round brilliant cut diamond, amount of physical reflection rays was obtained in such a manner that meshes are defined by dividing the radius of the diamond into 100 equal segments and the ray density was obtained with respect to each mesh. Since the radius of diamonds is several millimeters, a mesh is an area of several hundred square micrometers. By considering an area perceptible by human eyes, amounts of visual-perceptible reflection rays were obtained by calculating a square root of values of tenths of the amount of physical reflection rays with respect to patterns having areas larger than 30 meshes among patterns of reflection rays from a diamond, and the sum of the amounts of visual-perceptible reflection rays was obtained with respect to all the patterns. That is, the amount of visual-perceptible reflection rays = Σ{(the amount of physical reflection rays with respect to patterns of 30 meshes or more in each segment)/10}^{1/2}.

When people observe a diamond above a table facet of the diamond, light coming from a back of the observer is obstructed by him and does not reach the diamond. On the other hand, light coming with a large angle is not so effective for reflection rays. So, in the previous patent application, light coming into a diamond with an angle of 20 degrees to 45 degrees with a vertical line connecting a center of the table facet to a culet was treated as an effective light, amount of reflection rays due to the incident light within the angle range is called "amount of effective visual-perceptible reflection rays", and a cut design to enhance the amount of effective visual-perceptible reflection rays was also discussed.

Although the amount of effective visual-perceptible reflection rays is effective for a study of reflection rays from a diamond when an incident light uniformly comes around the diamond, it is necessary that strength of the incident light is expressed by using cos²θ, in which θ is incident angle of the incident light, when the light comes from a flat ceiling.

There is an oval-cut diamond having an oval girdle as a modification of the round brilliant cut. The oval-cut diamond has a crown above a girdle, a pavilion below the girdle and a table facet on a top of the crown. An oval cut diamond that is not symmetrical with respect to a central axis is usually used.

The oval-cut diamond that is not symmetrical with respect to a central axis has a poor brilliancy of reflection rays. Also, there is a round brilliant cut flatly deformed in a breadth wise or a lengthwise direction. For example, refer to Non-Patent Document 1 (see below).

The oval-cut diamond has a girdle in an oval shape, a crown provided above the girdle and having a table facet on a top of it and a pavilion below the girdle. The crown and the pavilion in the oval brilliant cut are deformed, following a replacement of a round girdle in a round brilliant cut to an oval girdle. Namely, in the pavilion of the oval brilliant cut there are eight pavilion main facets converging on a culet from crossing points of the oval girdle with long axes and short axes of the girdle and bisectors dividing the angle between the long axis and the short axis equally into two. The pavilion has sixteen lower girdle facets, almost in an oval sector or a triangle, each is a bisection made from a portion surrounded by neighboring pavilion main facets and the girdle. In the oval-cut diamond described in Non-Patent Document 1, a pavilion angle (an angle between a pavilion main facet and a table facet) of pavilion main facets on the short axis side becomes larger than a pavilion angle of pavilion main facets positioned on the long axis side, and a pavilion angle of pavilion main facets in the midpoint between the long axis and the short axis is intermediate between their pavilion angles. In the same manner, an angle of lower girdle facets on the long axis side with the table facet becomes larger than an angle of lower girdle facets on the short axis side with the table facet.

On the other hand, in the crown, vertexes on the long axis side among the vertexes of the octagonal table facet are shifted outside, and vertexes on the short axis side among the vertexes of the octagonal table facet are shifted inside so that the octagonal table facet is lengthened a little in the long axis direction, and lengths in a radial direction and crown angles of crown main facets (it may be called "bezel facet" sometimes) are made equal for all.

As a result of it, the oval brilliant cut diamond is almost equal among the eight crown angles and different among the eight pavilion angles. Also, an angle of each of the sixteen lower girdle facets with the table facet is different among them. Since the pavilion angle of the pavilion main facets on the long axis side is smaller, but the pavilion angle of the pavilion main facets on the short axis side is larger, the pavilion main facet positioned in the midpoint between the long axis and the short axis cannot be directed in a direction of the central axis. Since the diamond has different pavilion angles, different lower girdle facet angles and facets not directed in the central axis direction as explained above, lights reflected on the pavilion main facets and the lower girdle facets and light patterns appearing on these facets are not uniform, because reflection light directions from the facets are not the same, and they are difficult to identify because of extremely fine reflection patterns. Also, the brilliancy on the crown facets and the table facet is very poor.

The present inventors have obtained reflection ray amount based on "the amounts of visual-perceptible reflection rays" introduced in the above-mentioned patent application. An arithmetic mean of "an amount of effective visual-perceptible reflection rays" obtained by an incident light of 20 degrees to 45 degrees and "an amount of visual-perceptible reflection rays" obtained from incident light strength modified by using cos²θ of incident angle θ of an incident light is referred to as "reflection evaluation index". An oval-cut having an enhanced brilliancy of reflection light has been studied, using the reflection evaluation index.
Patent Document 1: Japanese Laid-open Patent 2003-310318
Non-Patent Document 1: THE GIA DIAMOND DICTIONARY 3rd Edition, US, Published by the Gemological Institute of America (GIA), in 1993, Pages 167 to 168

A further prior art oval cut diamond is known from WO-A-02/27075.

### DISCLOSURE OF THE INVENTION

### PROBLEMS TO BE SOLVED BY THE INVENTION

Therefore, an object of the present invention is to provide an oval-cut diamond having an enhanced brilliancy of reflection lights on observing above a table of the diamond.

### MEANS FOR SOLVING THE PROBLEMS

An oval-cut diamond according to the present invention comprises a columnar girdle, a crown provided above the girdle and having an octagonal table facet on a top of the crown and a pavilion provided below the girdle, and the girdle has an upper ridge between the crown and the girdle and a lower ridge between the pavilion and the girdle. A contour line of a girdle cross-section, parallel to the table facet, is in an oval or oval-like shape. The diamond has a central plane containing a long axis of the contour line and being a plane vertical to the table facet, a straight central axis crossing vertically the table facet on the central plane, a circumscribed circle having a center on the central axis and circumscribing the contour line at an end of the long axis, and eight-dividing planes composed of the central plane, a plane containing a short axis of the contour line of the girdle cross-section and the central axis and planes dividing an angle around the central axis between the plane containing the short axis and the central axis and the central plane equally into two.

The table facet has two opposite vertexes on the central plane and six vertexes symmetrical with respect to the central plane.

The crown has eight tetragonal crown main facets, eight triangular star facets and sixteen upper girdle facets on a diamond circumference between the girdle upper ridge and the table facet. Each of the crown main facets is a tetragon having two opposite vertexes composed of a point, at which each of the eight-dividing planes crosses the girdle upper ridge, and each vertex of the table facet, and other vertexes each owned jointly with each of two other crown main facets neighboring on the crown main facet. Each of the star facets is a triangle having a bottom side coinciding with each side of the table facet and an opposite vertex coinciding with each of the other vertexes jointly owned by two neighboring crown main facets each having a vertex at each end of the bottom side. Each of the upper girdle facets is a triangle or an oval sector having a bottom side coinciding with a side, whose end is on the girdle upper ridge, among sides of the crown main facets and a vertex on the girdle upper ridge.

The pavilion has a bottom apex at a lower end of the central axis, and eight pavilion main facets and sixteen lower girdle facets on the diamond circumference between the bottom apex and the girdle lower ridge. Each of the pavilion main facets is a tetragon or a part of a tetragon extending from the bottom apex toward a crossing point of each of the eight-dividing planes with the girdle lower ridge on the diamond circumference between the bottom apex and the girdle lower ridge, and having a side, whose end coincides with the bottom apex, jointly owned with each of two other pavilion main facets neighboring on the pavilion main facet. Each of at least seven pavilion main facets among the pavilion main facets is formed with opposite vertexes composed of a crossing point of each of the eight-dividing planes with the circumscribed circle and the bottom apex. Each of the lower girdle facets formed between the pavilion main facets and the girdle lower ridge is a triangle or an oval sector having a bottom side coinciding with a side having an end on the girdle lower ridge among sides of each of the pavilion main facets and a vertex on the girdle lower ridge. And, each of the lower girdle facets is disposed on each of both sides of each of the pavilion main facets.

The oval or oval-like shape formed by the contour line of the girdle cross-section has a ratio of a short radius to a long radius (b/a) of 0.6 or more, in which a radius in a long axis direction of the shape (hereinafter, referred to as "long radius") is denoted as "a", and a radius in a short axis direction of the shape (hereinafter, referred to as "short radius") is denoted as "b".

In the oval-cut diamond according to the present invention, each pair of four pairs of pavilion main facets, of which each pair is composed of two pavilion main facets positioned opposite to each other with respect to the central axis, has two crown main facets facing the two pavilion main facets through the girdle. It is necessary that the two pavilion main facets, the two crown main facets and the table facet have a common plane vertical to all of them within them.

In the above-mentioned oval-cut diamond of the present invention, it is preferable that the central axis is disposed in a center of the long axis of the contour line of the girdle cross-section, and the circumscribed circle circumscribes the contour line at both ends of the long axis.

It is preferable that at least seven pavilion main facets, having opposite vertexes composed of a crossing point of each of the eight-dividing planes with the circumscribed circle and the bottom apex, have a substantially equal pavilion angle to the table facet.

It is preferable that each of the pavilion main facets has opposite vertexes composed of a crossing point of each of the eight-dividing planes with the circumscribed circle and the bottom apex. And, it is more preferable that each of the pavilion main facets has a substantially equal pavilion angle to the table facet.

In the above-mentioned oval-cut diamond of the present invention, it is preferable that a crown main facet that each of the pavilion main facets with the substantially equal pavilion angle faces through the girdle has a substantially equal crown angle to the table facet.

In the above-mentioned oval-cut diamond of the present invention, it is preferable that a pavilion angle to the table facet each of the pavilion main facets has and a crown angle to the table facet each of the crown main facets has are in a region surrounded by lines connecting points (p, c): (43 degrees, 10 degrees), (41 degrees, 14 degrees), (37 degrees, 23 degrees), (35 degrees, 33 degrees), (35 degrees, 36 degrees), (37 degrees, 42 degrees), (39 degrees, 42 degrees), (41 degrees, 36 degrees), (43 degrees, 24 degrees) and (44.7 degrees, 9 degrees) on a graph drawn with pavilion angles (p) in a vertical line and crown angles (c) in a horizontal line.

In the above-mentioned oval-cut diamond of the present invention, it is preferable that the girdle has a substantially equal girdle height around a whole circumference of the girdle, and six pavilion main facets excluding two pavilion main facets extending in a long axis direction from the bottom apex and lower girdle facets disposed between two neighboring pavilion main facets among the six pavilion main facets have adjusting facets between a respective facet and the girdle lower ridge having a larger angle to the table facet than the pavilion angle and forming a ridge between the respective facet and each of the adjusting facets.

In the above-mentioned oval-cut diamond of the present invention, it is preferable that the central axis of the diamond passes a center of the long axis of the contour line of the girdle cross-section.

In the oval-cut diamond of the present invention, it is preferable that the contour line of the girdle cross-section parallel to the table is oval.

And, the present invention can be applied to a diamond called "marquise" that has a contour line in a shape of two oval sectors (or circle sectors that are a kind of oval sectors) crossing each other on a girdle cross-section parallel to the table facet.

Further, the present invention can be applied to a diamond called "pear-shape" that has a contour line in a shape of three oval sectors (or circle sectors that are a kind of oval sectors) crossing each other on a girdle cross-section parallel to the table facet.

### ADVANTAGES OF THE INVENTION

The oval-cut diamond according to the present invention exhibits an enhanced brilliancy of reflection lights when observed above the table. The brilliancy has been improved by about 200 to 300 % in comparison with that of a diamond flatly deformed in a breadth wise or a lengthwise direction from a round brilliant cut. Also, a girdle height can be substantially equal around the whole girdle circumference so that a good appearance can be obtained.

### BRIEF DESCRIPTION OF DRAWINGS

FIG. 1 shows a top plan view of an oval-cut diamond of EXAMPLE 1 of the present invention;
FIG. 2 shows a bottom plan view of the oval-cut diamond of EXAMPLE 1 of the present invention;
FIG**.** 3 shows a front view of the oval-cut diamond of EXAMPLE 1 of the present invention;
FIG**.** 4 shows a side view of the oval-cut diamond of EXAMPLE 1 of the present invention;
FIG. 5 shows an explanatory view of optical paths, using a zx-cross-section of the oval-cut diamond of EXAMPLE 1;
FIG. 6 shows an explanatory view of optical paths, using an yz-cross-section of the oval-cut diamond of EXAMPLE 1;
FIG. 7 shows a top plan view of an oval-cut diamond of EXAMPLE 2;
FIG. 8 shows a bottom plan view of the oval-cut diamond of EXAMPLE 2;
FIG. 9 shows a front view of the oval-cut diamond of EXAMPLE 2;
FIG. 10 shows a side view of the oval-cut diamond of EXAMPLE 2;
FIG. 11 shows a bottom plan view of an oval-cut diamond of EXAMPLE 3;
FIG. 12 shows a front view of the oval-cut diamond of EXAMPLE 3;
FIG. 13 shows a side view of the oval-cut diamond of EXAMPLE 3;
FIG. 14 shows an explanatory view of optical paths, using a zx-cross-section of the oval-cut diamond of EXAMPLE 3;
FIG. 15 shows an explanatory view of optical paths, using an yz-cross-section of the oval-cut diamond of EXAMPLE 3;
FIG. 16 shows a top plan view of a comparative oval-cut diamond;
FIG. 17 shows a bottom plan view of the comparative oval-cut diamond;
FIG. 18 shows a front view of the comparative oval-cut diamond;
FIG. 19 shows a side view of the comparative oval-cut diamond;
FIG. 20 is a graph showing relationship between reflection evaluation indexes and short-long radius ratios (b/a) of the oval-cut diamonds of EXAMPLE 1 of the present invention and the comparative oval-cut diamond;
FIG. 21 is a graph showing a region of pavilion angles (p) and crown angles (c) having desirable reflection evaluation indexes for the oval-cut diamonds of the present invention;
FIG. 22 is a bottom plan view of an oval-cut diamond of EXAMPLE 4;
FIG. 23 is a front view of the oval-cut diamond of EXAMPLE 4;
FIG. 24 is a side view of the oval-cut diamond of EXAMPLE 4;
FIG. 25 is a top plan view of an oval-cut diamond of EXAMPLE 5;
FIG. 26 is a bottom plan view of the oval-cut diamond of EXAMPLE 5;
FIG. 27 is a front view of the oval-cut diamond of EXAMPLE 5;
FIG. 28 is a side view of the oval-cut diamond of EXAMPLE 5;
FIG. 29 is a top plan view of an oval-cut diamond of EXAMPLE 6;
FIG. 30 is a bottom plan view of the oval-cut diamond of EXAMPLE 6;
FIG. 31 is a front view of the oval-cut diamond of EXAMPLE 6;
FIG**.** 32 is a side view of the oval-cut diamond of EXAMPLE 6; and
FIG. 33 is an explanatory view of an observation method of the oval-cut diamond.

### EXPLANATION OF REFERENCE NUMERALS

- 100, 200, 300, 400, 500, 600:: oval-cut diamond
- 110, 210, 310, 410, 510, 610:: girdle
- 120, 520, 620:: crown
- 122, 522, 622:: table facet
- 126, 526, 626, 626':: crown main facet
- 132, 532, 632:: star facet
- 136, 536, 636:: upper girdle facet
- 140, 340, 540, 640:: pavilion
- 142, 144, 146, 342, 344, 346, 542,:
- 544, 546, 642, 642', 644, 646:: pavilion main facet
- 152, 352, 552, 652:: lower girdle facet
- 162, 562, 662:: bottom apex
- 170, 570, 670: eight-dividing plane
- 394, 396, 398a, 398b, 398c, 594, 596,:
- 598a, 598b, 598c, 694, 696, 698a, 698b, 698c:: adjusting facet
- 398, 598, 698:: ridge

### BEST MODE FOR CARRYING OUT OF THE INVENTION

The present invention is described below in detail with reference to EXAMPLES.

### EXAMPLE 1

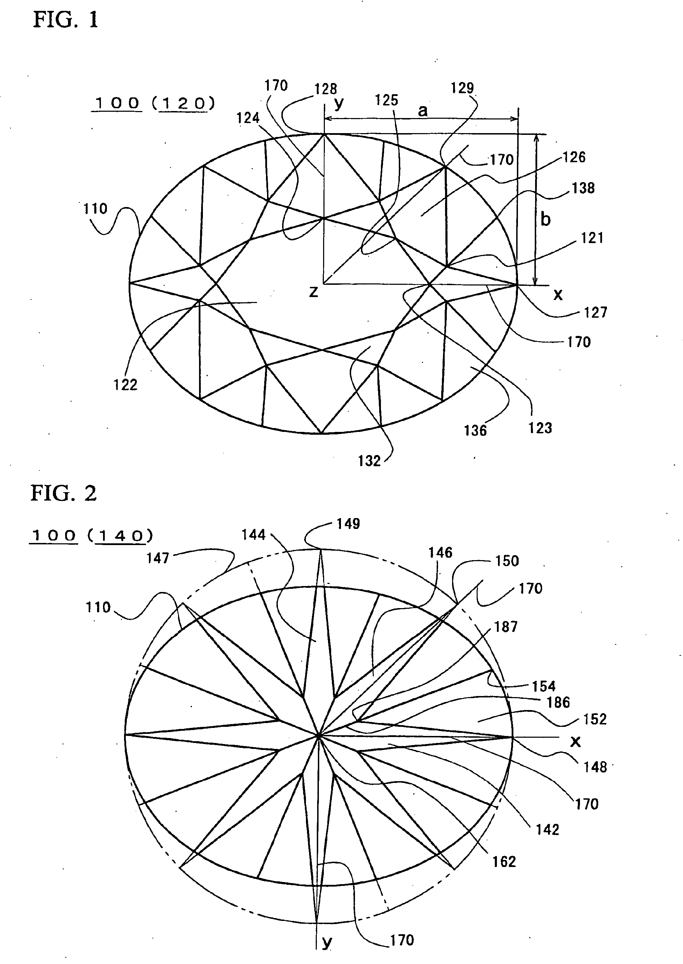

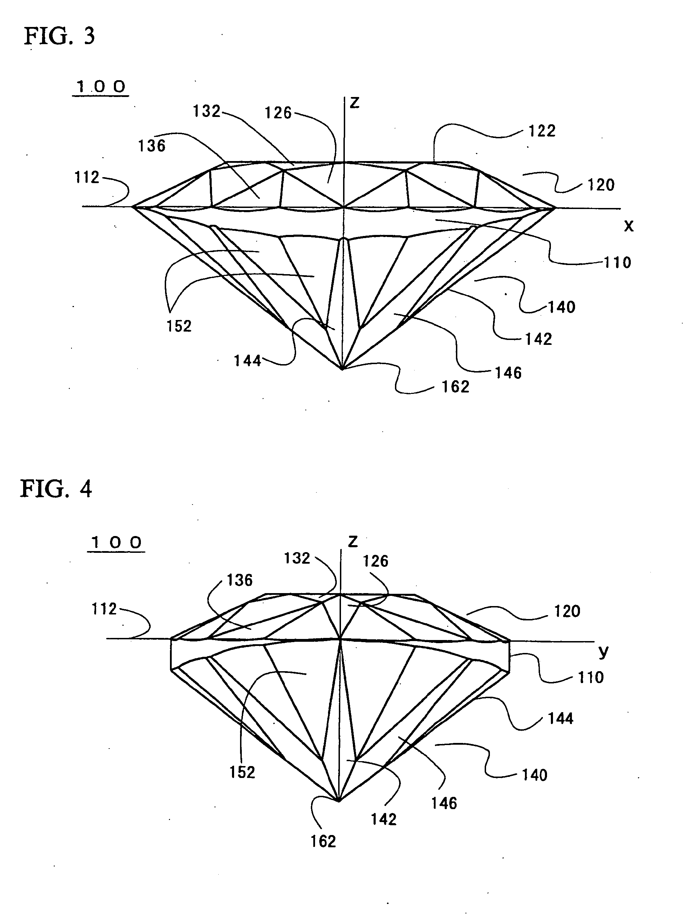

An oval-cut diamond according to the present invention will be described with reference to the drawings showing EXAMPLE 1. FIG. 1 is a top plan view of the oval-cut diamond in EXAMPLE 1 of the present invention. FIG. 2 is a bottom plan view of the oval-cut diamond. FIG. 3 is a front view of the oval-cut diamond. FIG. 4 is a side view of the oval-cut diamond. In these figures, the oval-cut diamond 100 has a columnar girdle 110, a crown 120 placed above the girdle 110, and a pavilion 140 placed below the girdle 110. The crown 120 has an octagonal table facet 122 at its top. FIG. 1 is a diagram showing the crown 120 from above. FIG. 2 is a diagram showing the pavilion 140 from below.

An oval brilliant cut diamond has a girdle with an oval cross-section, a crown provided above the girdle and having a table facet at its top, and a pavilion located below the girdle. An upper ridge is located between the girdle and the crown. A lower ridge is located between the girdle and the pavilion. The shape of crown and pavilion of the oval brilliant cut correspond to that of a round brilliant cut with its circle girdle replaced with the oval girdle.

As is apparent from FIGS. 1 and 2, in the oval-cut diamond in EXAMPLE 1, a cross-section of the girdle 110 that is parallel to the table facet is oval. However, as described below, the present invention is applicable not only to diamonds having a girdle with an oval cross-section but also to diamonds in which a contour line of a girdle cross-section parallel to the table facet is oval or quasi-oval.

For convenience of the description below, a central plane is defined as a plane which contains a long axis of contour line of the girdle cross-section and which is perpendicular to the table facet. A central axis is a straight line which is located on the central plane and which crosses the table facet at right angles. In the present example, the central axis is located in the center of long axis of the contour line, that is, in the center of the octagonal table facet 122. The central axis is defined as z-axis. The origin of the z-axis is located on an upper cross-section of the girdle, that is, a cross-section between the crown and the girdle. The x-axis is drawn in the long axis direction of the girdle from the origin. The y-axis is drawn in the short axis direction of the girdle from the origin. A bisector is drawn which almost equally divides the angle between the long and short axes into two. A respective eight-dividing plane 170 is a. plane containing the central axis (z-axis) and extending in the direction of each of the x-axis, the bisector and the y-axis.

With reference to FIGS. 1, 3 and 4, two opposite vertexes 123 of the table facet 122 are located on an eight-dividing plane in an x-axis direction and in an -x-axis direction, that is, on the central plane. The other six vertexes 124 and 125 are symmetric with respect to the central plane. In FIG. 1, the table facet 122 is symmetric with respect to the y-axis. Accordingly, the two vertexes 124 are located on an eight-dividing plane containing the y-axis. In addition to the table facet 122, the crown 120 has eight tetragonal crown main facets 126, eight triangular star facets 132 and sixteen upper girdle facets 136.

The two opposite vertexes 123 of the table facet 122 are at substantially the same distance from the central axis (z-axis) on the central plane in the x-axis direction (long axis direction). The two opposite vertexes 124 are at substantially the same distance from the central axis in the y-axis direction (short axis direction). Each of the other four vertexes 125 is located in the direction of a bisector equally dividing the angle between the long axis and short axis into two, at substantially the same distance from the central axis, but not necessarily on the bisector.

The crown main facets 126 are tetragons having opposite vertexes 127 and 123, 129 and 125, and 128 and 124, respectively, composed of the vertexes 123, 125 and 124 of the table facet 122 and points 127, 129 and 128, at each of which the corresponding one of the eight-dividing planes 170 crosses the upper ridge of the girdle 110, and other vertexes 121 shared by neighboring crown main facets 126. Each of the crown main facets 126 crosses the corresponding eight-dividing plane at right angles. The angle (crown angle (c)) between the crown main facet and the table facet is preferably the same for the eight crown main facets.

To form a crown main facet 126, a plane crossing the eight-dividing plane at right angles and having the same angle with the table facet is formed so as to pass through one of the vertexes of the table facet. A point at which the intersecting line between this plane and the eight-dividing plane crosses the girdle can be defined as a vertex on the girdle of the crown main facet. For example, for the crown main facet 126 located in the direction in which the angle between the x-axis and the y-axis is equally divided into two, the following plane is formed so as to pass through the vertex 125 of the table facet: the plane has a predetermined crown angle and crosses the eight-dividing plane located in the direction in which the angle between the x-axis and the y-axis is equally divided into two. The point 129 at which the intersecting line between this plane and the eight-dividing plane 170 crosses the girdle 110 is defined as a vertex on the girdle. The crown main facet 126 thus has the opposite vertexes 125 and 129. Seven other crown main facets 126 are similarly formed. The vertex 121 is a point on the intersecting line between the neighboring crown main facets having the same depth from the table facet. The eight tetragonal crown main facets 126 thus formed cross the respective eight-dividing planes at right angles and have the same crown angle (c).

Each of the star facets 132 is a triangle having a bottom side coinciding with the corresponding side (for example, a segment 123-125) of the table facet 122, and vertexes corresponding to the opposite ends 123 and 125 of the bottom side (for example, the segment 123-125), and another vertex corresponding to the point 121 shared by the two neighboring crown main facets 126.

Each of the upper girdle facets 136 has a bottom side coinciding with one (for example, 127-121) of the sides of the crown main facet 126 which has an end (for example, 127) on the upper ridge of the girdle 110, and a vertex (for example, 138) on the girdle upper ridge. The upper girdle facet 136 is normally triangular but may be shaped like an oval sector having an intersecting line with the girdle, which constitutes an ecliptic arc as shown FIG. 1. In this example, the two upper girdle facets 136 are adjacent to each other via a boundary line composed of a line joining the intersecting point between the eight-dividing plane 170 and the girdle 110 and the vertex 121 shared by the neighboring crown main facets.

With reference to FIGS. 2 to 4, the pavilion 140 has a bottom apex 162, that is, a culet, at a lower end of the central axis. The area of the pavilion 140 is shaped almost like an elliptic cone between the bottom apex 162 and the lower ridge of the girdle 110. The pavilion 140 has eight pavilion main facets 142, 144 and 146 and sixteen lower girdle facets 152.

The respective pavilion main facets extend from the bottom apex 162 in the x-axis direction and y-axis direction and the direction of the bisector between the bottom apex 162 and the lower ridge of the girdle 110. The pavilion main facet 142 extending in the x-axis direction, the pavilion main facet 144 extending in the y-axis direction, and the pavilion main facet 146 extending in the bisector direction are each shaped like a tetragon or a part of a tetragon. The neighboring pavilion main facets 142 and 146 share a side 186 having the bottom apex 162 at one end. The other neighboring pavilion main facets 144 and 146 also share the side 186 having the bottom apex 162 at one end.

Each of the lower girdle facets 152 is a triangular or oval sector formed on the elliptic conical outer peripheral surface of the pavilion between the pavilion main facet 142, 144, or 146 and the lower ridge of the girdle 110; the lower girdle facet 152 has a bottom side coinciding with one (for example, 148-187) of sides of the pavilion main facet which has one end on the girdle lower ridge, and a vertex (for example, 154) on the girdle lower ridge.

A circumscribed circle 147 circumscribing the girdle at a long axis end of the girdle 110 is drawn around the central axis (see FIG. 2). The respective eight-dividing planes 170 cross the circumscribed circle 147 at the points 148, 149 and 150. Each of the pavilion main facets 142, 144 and 146 has opposite vertexes corresponding to the bottom apex 162 and the corresponding one of the points 148, 149 and 150. Each pavilion main facet crosses the corresponding eight-dividing plane at right angles. The angle (pavilion angle (p)) between the pavilion main facet and the table facet is the same for all the pavilion main facets. Neighboring ones of the pavilion main facets 142, 144 and 146 share the side 186 having the bottom apex 162 at one end and the other end 187 of that side 186. As is apparent from FIG. 2, on the short axis side, the short radius of the girdle 110 is shorter than the radius of the circumscribed circle 147. Accordingly, a girdle-side tip of the short axis-side pavilion main facet 144 is cut to form a part of a tetragon.

With reference to FIG. 2, each of the lower girdle facets 152 has a side (segment 187-150) joining the other end 187 of the side 186 shared by the two neighboring pavilion main facets (for example, 142 and 146), to the interesting point 150 between the eight-dividing plane and the circumscribed circle 147. The lower girdle facet 152 has a vertex corresponding to the point 154 at which a plane equally diving the angle between the two neighboring eight-dividing planes 170 into two crosses the girdle 110. That is, the lower girdle facet 152 is a triangular or oval sector sandwiched by the segment 187-150 and a segment 154-187.

In EXAMPLE 1, each of the pavilion main facets 142, 144 and 146 joins the bottom apex 162 of the central axis to the corresponding one of the points 148, 149 and 150 on the circumscribed circle. Thus, the angle (pavilion angle (p)) between the pavilion main facets and the table facet 122 is the same for all the pavilion main facets.

The oval-cut diamond 100 according to the present example has a girdle height not having the same value all around the entire circumference of the girdle. The diamond 100 has a smaller girdle height on the long axis side and a larger girdle height on the short axis side. In the crown, an almost straight line 112 is formed by sequentially joining points at which the girdle crosses the ridge between the neighboring upper girdle facets and the ridge between the upper girdle facet and the crown main facet. However, each of the pavilion main facets 142, 144 and 146 has a diagonal line joining the bottom apex to a point on the circumscribed circle 147. Consequently, the long axis-side pavilion main facet 142 crosses the oval girdle 110 on the circumscribed circle 147. The short axis-side pavilion main facet 144 crosses the oval girdle 110 at a position away from the circumscribed circle 147 in a -z direction. The pavilion main facet 146 extending in the bisector direction crosses the girdle 110 at a position slightly away from the circumscribed circle 147 in a -z direction. Thus, as shown in FIGS. 3 and 4, the girdle height is smaller on the long axis side, larger on the short axis side, and has an intermediate value on the bisector side.

In an oval or quasi-oval formed of the contour line of the girdle, as shown in FIG. 1, a radius (long radius) in the x-axis direction, that is, the long axis direction, is denoted as a. A radius (short radius) in the y-axis direction, that is, the short axis direction, is denoted as b. The oval-cut diamond of the present invention needs to have a ratio (b/a) of a short radius to a long radius, hereinafter referred to as "short-long radius ratio (b/a)", of at least 0.6, preferably more than 0.7.

The oval-cut diamond of the present invention has four pairs each of two pavilion main facets located opposite each other across the central axis. The pairs each consisting of two pavilion main facets located opposite each other across the central axis include a pair of two pavilion main facets 142 extending in the x-axis direction, a pair of two pavilion main facets 144 extending in the y-axis direction, and two pairs each of two pavilion main facets 146 extending in the bisector direction. The diamond further has four pairs each of two crown main facets located opposite each other across the central axis. The pairs each consisting of crown main facets located opposite each other across the central axis include a pair of two crown main facets extending in the x-axis direction, a pair of two crown main facets extending in the y-axis direction, and two pairs each of two crown main facet extending in the bisector direction. The pavilion main facets in each pair sit opposite the corresponding crown main facets across the girdle. Specifically, the pavilion main facets in the pavilion main facet pair extending in the x-axis direction sit opposite the respective crown main facets in the crown main facet pair extending in the x-axis direction. The pavilion main facets in the pavilion main facet pair extending in the y-axis direction sit opposite the respective crown main facets in the crown main facet pair extending in the y-axis direction. This also applies to the pavilion main facet pairs and crown main facet pairs extending in the bisector direction. In the present example, each pavilion main facet and the corresponding crown main facet cross the corresponding eight-dividing plane at right angles. Accordingly, the pavilion main facet pairs and crown main facet pairs sitting opposite each other across the girdle have a common vertical plane within the facets, respectively. The vertical plane crosses the table facet at right angles in the table facet. The common vertical plane of these facets makes the oval-cut diamond of the present invention more brilliant.

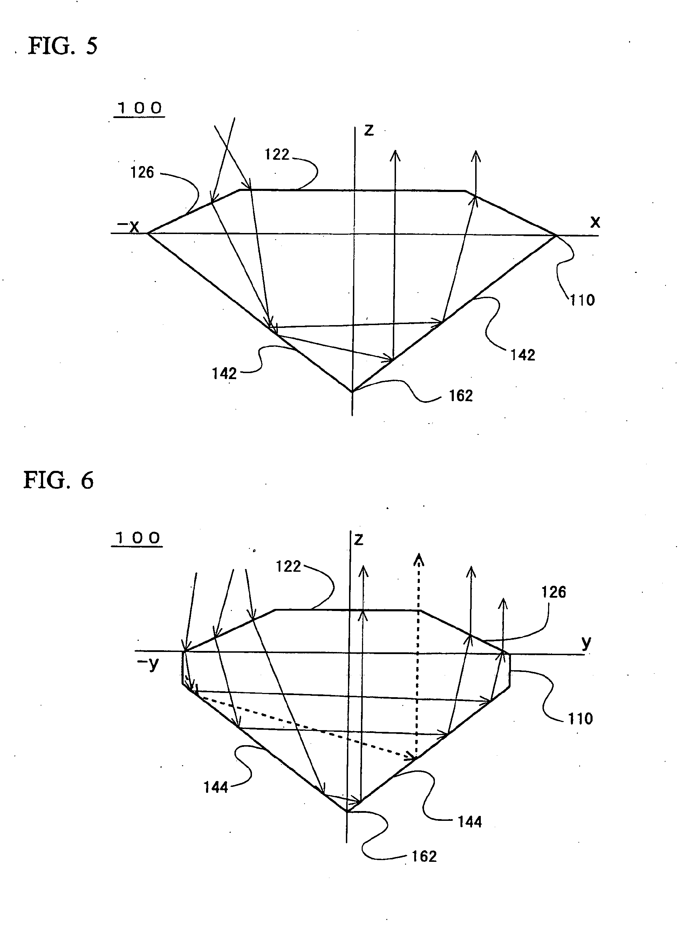

FIG. 5 shows optical paths in a zx-cross-section of the oval-cut diamond 100 in EXAMPLE 1. A common vertical plane is located in the table facet 122, -x-axis-side crown main facet 126, -x-axis-side pavilion main facet 142, x-axis-side pavilion main facet 142, and x-axis-side crown main facet 126. Light incident on a facet is refracted or reflected by the facet. The incident light and the refracted or reflected light travel along the vertical plane in the facet. When the five facets have a common vertical plane, certain light passes through or is reflected by all these facets. Thus, light externally entering the diamond 100 through the table facet 122 and -x-axis-side crown main facet 126 is refracted by the table facet and the crown main facet and travel to the -x-axis-side pavilion main facet 142. The light is then reflected by the -x-axis-side pavilion main facet 142 and travels to the x-axis-side pavilion main facet 142, by which it is reflected. The light then exits the diamond 100 through the table facet 122 and x-axis-side crown main facet 126. The light thus enters the diamond through the table facet or crown main facet, is reflected twice inside the diamond, and then exits the diamond 100. The light is most brilliant which enters the diamond through the table facet or crown main facet and which exits the diamond 100 after being reflected twice inside the diamond. The brilliance decreases with increasing number of reflections.

Light incident on the -x-side half of the table facet 122 or on the -x-axis-side crown main facet 126 travels not only to the -x-axis-side pavilion main facet 142 but also partly to the lower girdle facets 152 located on the opposite sides of the -x-axis-side pavilion main facet 142. Light incident on the two star facets 132 and on the two upper girdle facets 136 travels partly to the lower girdle facets 152 located on the opposite sides of the -x-axis-side pavilion main facet 142; the two star facets 132 are located between the -x-axis-side crown main facet 126 and the table facet 122, and the two upper girdle facets 136 are located between the -x-axis-side crown main facet 126 and the girdle. Part of the light reflected by the -x-axis-side lower girdle facet 152 and part of the light reflected by the -x-axis-side pavilion main facet 142 travel to the lower girdle facets 152 located on the opposite sides of the x-axis-side pavilion main facet 142, by which the whole light is reflected. The light then partly passes through the two start facets 132 located around the x-axis-side crown main facet 126 and through the two upper girdle facet 136, and exit the diamond 100. This allows even the star facets 132 and upper girdle facets 136 to shine brilliantly. When a common vertical plane is disposed in a pair of pavilion main facets located at opposite each other with respect to the central axis and in a pair of crown main facets located at opposite each other with respect to the central axis, not only the table facet and crown main facet but also the surrounding star facet and upper girdle facet shine brightly. However, the brilliancy of the star facet and upper girdle facet is associated with the brilliancy of the table facet and crown main facet. Accordingly, the description of the star facet and upper girdle facet will be omitted in the description below.

If these facets did not have a common vertical plane, for example, the paired pavilion main facets extending in the x-axis direction did not have a common vertical plane therein, light having reached one of the pavilion main facets would not travel to the other pavilion main facet. Thus, the light would be reflected four to six or more times inside the diamond before exiting the diamond through the table facet or the crown main facet, or would pass through the diamond without being reflected by the pavilion facet or the lower girdle facet. This reduces the brilliancy of the diamond. Like round brilliant cut diamonds, the oval brilliant cut diamond is buried in a setting. Consequently, light exiting the diamond through the facets of the pavilion does not contribute to brilliancy.

FIG. 6 shows optical paths in a yz-cross-section of the oval-cut diamond 100 in EXAMPLE 1. Light externally entering the diamond 100 through the table facet 122 and y-axis-side crown main facet 126 is refracted by the table facet and crown main facet and reflected by the -y-axis-side pavilion main facet 144. The light then travels to the y-axis-side pavilion main facet 144, by which it is reflected. The light then exits the diamond through the table facet 122 and y-axis-side crown main facet 126. Also in this case, light incident on the diamond is reflected twice inside the diamond and then exits the diamond through the table facet or crown main facet, thus providing intense brilliance. A similar light path is used for the pair of pavilion main facets 146 and crown main facet 126 located in the bisector direction. Accordingly, the description for these facets is omitted. However, a dark shadow appears close to the outer periphery of the table facet 122. To exit the diamond through an area close to an outer periphery of the table facet 122, light must be reflected inside the girdle or pass through the girdle as shown by thick broken lines in FIG. 6. However, the scarce or very small quantity of such light causes a shadow to appear close to the outer periphery of the table facet.

Table 1 shows reflection evaluation indices obtained for oval-cut diamonds in EXAMPLE 1 (short-long radius ratio (b/a): 0.8). As is apparent from Table 1, these diamonds exhibit reflection evaluation indices of 348 and 351, respectively, and are more brilliant than diamonds in a comparative example described below. The diamonds in EXAMPLE 1 exhibit reflection evaluation indices that are as high as those of diamonds in EXAMPLE 3 which have adjusting facets.

**TABLE 1**

| Sample | Short-long radius ratio (b/a) | Pavilion angle (p) | Crown angle (c) | Reflection evaluation index |
|---|---|---|---|---|
| 1 | 0.8 | 39 degrees | 24 degrees | 348 |
| 2 | 0.8 | 40 degrees | 26 degrees | 351 |

### EXAMPLE 2

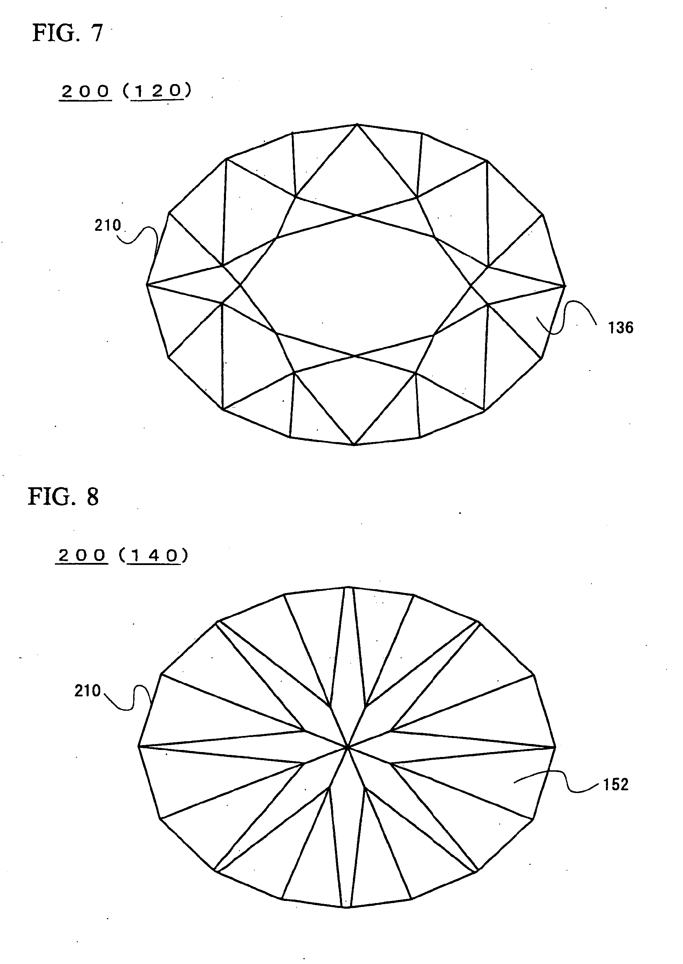

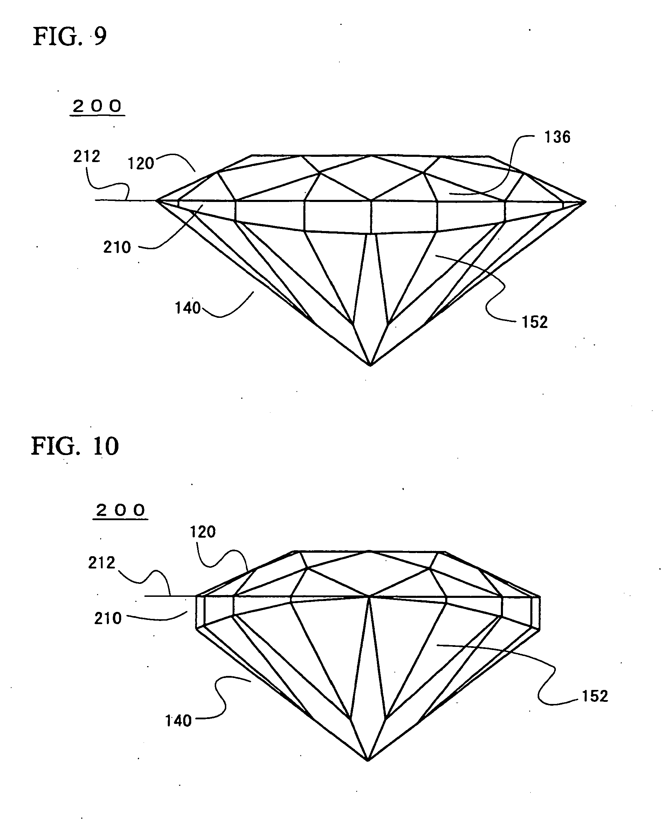

With reference to FIGS. 7 to 10, description will be given of an oval-cut diamond 200 in EXAMPLE 2 of the present invention. FIG. 7 is a top plan view of the diamond 200. FIG. 8 is a bottom plan view of the diamond 200. FIG. 9 is a front view of the diamond 200. FIG. 10 is a side view of the diamond 200. In these drawings and the following description, the same components as those of the diamond 100 in EXAMPLE 1 are denoted by the same reference numerals. The diamond 200 has a columnar girdle 210, the crown 120 located above the girdle 210, and the pavilion 140 located below the girdle 210. The crown 120 and pavilion 140 of the diamond 200 have the same structures as those of the crown 120 and pavilion 140 of the diamond 100 in EXAMPLE 1.

A horizontal cross-section of the girdle 210 is shaped like a sixteen side polygon. The upper girdle facet 136 crosses an outer peripheral surface of the girdle 210 so as to form a straight line. The lower girdle facet 152 crosses the outer peripheral surface of the girdle 210 so as to form a straight line. The intersecting line between the upper girdle facet 136 and the girdle outer peripheral surface is an almost straight line 212. However, a line joining the opposite ends of the intersecting line between the lower girdle facet and the girdle outer peripheral surface is bent downward on the short axis side and upward on the long axis side to form an ellipse as is the case with EXAMPLE 1. Thus, the girdle height is smaller on the long axis side, larger on the short axis side, and has an intermediate value between the long and short axis sides. The diamond 200 has exactly the same crown and pavilion facet structures as those in the diamond 100 and thus the same reflection characteristics as those of the diamond 100.

### EXAMPLE 3

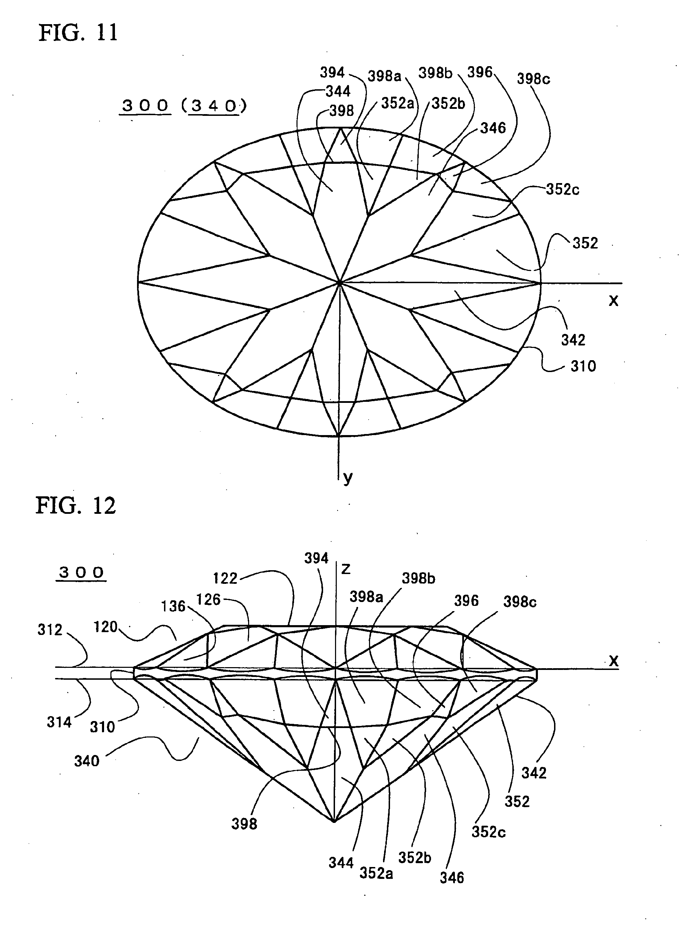

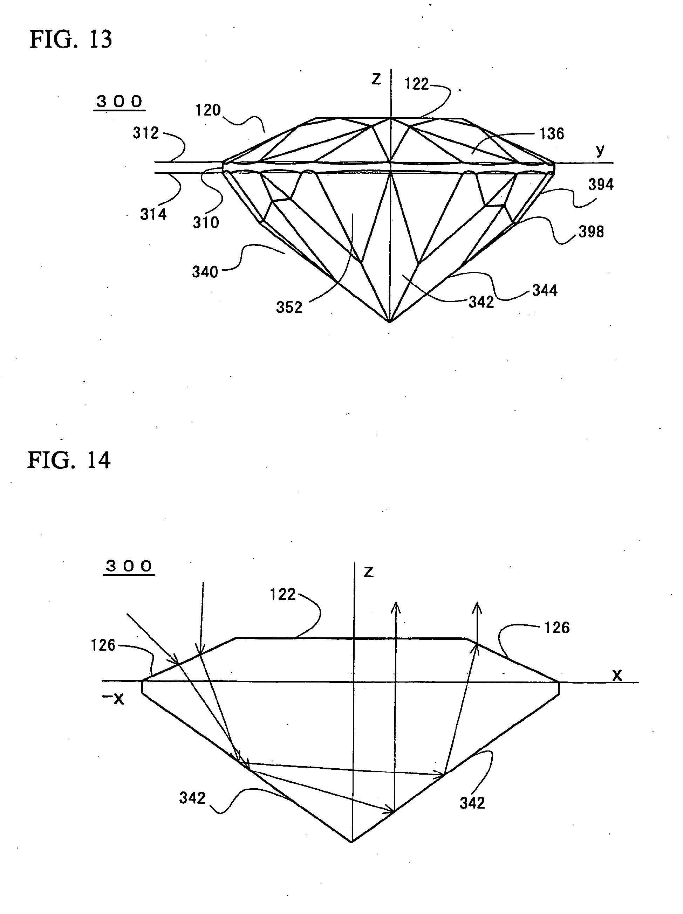

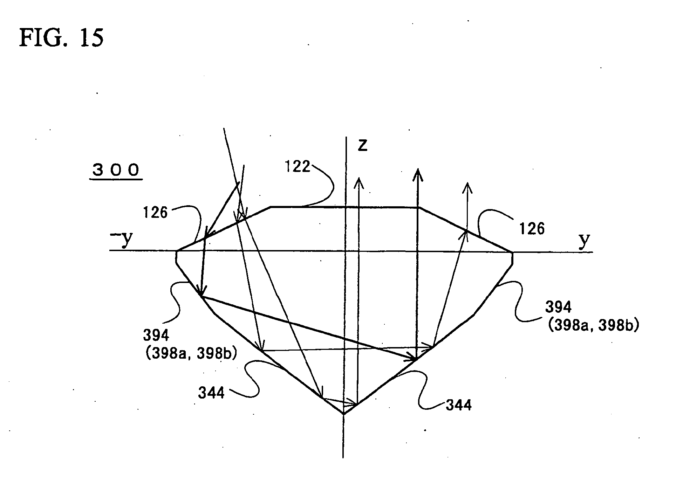

With reference to FIGS. 11 to 15, description will be given of an oval-cut diamond 300 in EXAMPLE 3 of the present invention. FIG. 11 is a bottom plan view of the diamond 300. FIG. 12 is a front view of the diamond 200. FIG. 13 is a side view of the diamond 200. FIG. 14 is a diagram illustrating optical paths in a zx-cross-section of the diamond 300. FIG. 15 is a diagram illustrating optical paths in a yz-cross-section of the diamond 300. The crown 120 of the diamond 300 is exactly the same as that in EXAMPLE 1. Accordingly, the top plan view of FIG. 1 also applies to the diamond 300. In these drawings and the following description, the same components as those of the diamond 100 in EXAMPLE 1 are denoted by the same reference numerals. The diamond 300 has a columnar girdle 310, the crown 120 located above the girdle 310, and a pavilion 340 located below the girdle 310.

The diamond 300 has pavilion main facets 342, 344 and 346 and lower girdle facets 352, 352a, 352b and 352c formed in the pavilion 340, among which facets near the zx-plane are formed similarly to those of the pavilion 140 of the diamond 100 in EXAMPLE 1. However, adjusting facets are formed between these facets and the short axis-side girdle lower ridge.

The adjusting facet is a triangular facet 394 which is located in a short axis-side pavilion main facet 344 close to the girdle and for which the angle between the triangular facet 394 and the table facet is slightly larger than the pavilion angle. The triangular facet 394 is formed between the pavilion main facet 344 shaped like a part of a tetragon and the girdle 310. A ridge 398 is formed of the line on which the pavilion main facet 344 crosses the adjusting facet 394. The distance from the zx-plane to the ridge 398 is preferably 0.5a to 0.6a in terms of the long radius (a). The ridge 398 traverses the lower girdle facets 352a located on the opposite sides of the pavilion main facet 344, the lower girdle facet 352b located between the pavilion main facet 346 disposed in the bisector direction and the lower girdle facet 352a, the pavilion main facet 346, and the neighboring lower girdle facet 352c. The ridge 398 subsequently crosses the girdle 310 before leaving the lower girdle facet 352c. The ridge 398 forms an adjusting facet 398a between the lower girdle facet 352a and the girdle 310, an adjusting facet 398b between the lower girdle facet 352b and the girdle 310, an adjusting facet 396 between the pavilion main facet 346 and the girdle 310, and an adjusting facet 398c between the lower girdle facet 352c and the girdle 310.

The adjusting facets 394, 398a, 398b, 396 and 398c are preferably formed so that the girdle height has substantially the same value around the entire girdle circumference. As shown in the front view in FIG. 12 and the side view in FIG. 13, the lower end center of each upper girdle facet 136 projects from the ridge between the girdle 310 and the crown 120 toward the girdle. The upper end centers of the lower girdle facets 352 and 352c and adjusting facets 398a, 398b, 398c project from the ridge between the girdle 310 and the pavilion 340 toward the girdle. In those parts, the girdle height appears to be smaller. However, this is because the oval outer peripheral surface of the girdle results in the projection, toward the girdle, of the lower end center of the upper girdle facet, the upper end center of the lower girdle facet, and the upper end center of the adjusting facet. Here, the girdle height is defined by the distance between a straight line 312 joining the girdle to the ridges between the upper girdle facets and ridges between the upper girdle facets and the crown main facets and a straight line 314 joining the girdle to the ridges between the lower girdle facets, the ridges between the lower girdle facets and the pavilion main facets, and ridges between the adjusting facets. This enables the girdle height to be substantially fixed around the entire girdle circumference. Further, the upper and lower ends of the girdle which enclose the girdle to constitute its outer peripheral surface are desirably composed of straight lines.

The appearance of the diamond is degraded if the girdle height partly changes or if the upper and lower end lines of the girdle constituting its outer peripheral surface have any large recess or protrusion. Further, the girdle outer peripheral surface does not often contribute to light reflected toward the table facet. This results in a dark part in the table facet. However, the effects of the present invention can be exerted even if the points at which the girdle crosses the ridges between the upper and lower girdle facets or the ridges between these facets and the crown/pavilion main facets are displaced upward or downward from the straight line 312 or 314 by about 15% of the long radius (a). The displacement at this level may be necessary for facet polishing.

In the diamond 300 in EXAMPLE 3, like the diamond 100 in EXAMPLE 1, each pavilion main facet and the corresponding crown main facet cross the corresponding eight-dividing plane at right angles. The angle (pavilion angle (p)) between the pavilion main facet and the table facet 122 is the same for all the pavilion main facets 342, 344 and 346. The angle (crown angle (c)) between the crown main facet 126 and the table facet 122 is the same for all the crown main facets 126. Moreover, the adjusting facet provided on the short radius side of the pavilion makes the girdle height substantially the same around the entire girdle circumference as shown in FIGS. 12 and 13. This improves the appearance of the diamond. Reflected light also exits an area of the table facet which is close to its short axis-side periphery. This allows the diamond to appear to shine brightly.

FIG. 14 shows optical paths in a zx-cross-section of the oval-cut diamond 300 in EXAMPLE 3. Light externally entering the diamond 300 through the table facet 122 or the -x-axis-side crown main facet 126 is refracted by the table facet or crown main facet and travel to the -x-axis-side pavilion main facet 342. The light is then reflected by the -x-axis-side pavilion main facet 342 and travels to the x-axis-side pavilion main facet 342, by which it is reflected. The light then exits the diamond 300 through the table facet 122 or x-axis-side crown main facet 126. The light thus enters the diamond through the table facet or crown main facet, is reflected twice inside the diamond, and then exits the diamond 300 through the table facet or main facet. This process is the same as that in EXAMPLE 1.

**FIG.** 15 shows optical paths in a yz-cross-section of the oval-cut diamond 300 in EXAMPLE 3. Light externally entering the diamond 300 through the table facet 122 or the -y-axis-side crown main facet 126 is refracted by the table facet or crown main facet. The light is then reflected by the -y-axis-side pavilion main facet 344 and travels to the y-axis-side pavilion main facet 344, by which it is reflected. The light then exits the diamond through the table facet 122 or y-axis-side crown main facet 126. As shown by thick lines, light reflected by the adjusting facet 394, 398a, or 398b located immediately below the girdle exits an area of the table facet 122 which is close to its outer periphery. This area thus shines brightly. In this regard, the diamond 300 in EXAMPLE 3 is superior to the diamond 100 in EXAMPLE 1.

### Comparison of EXAMPLE 3 with Comparative Examples

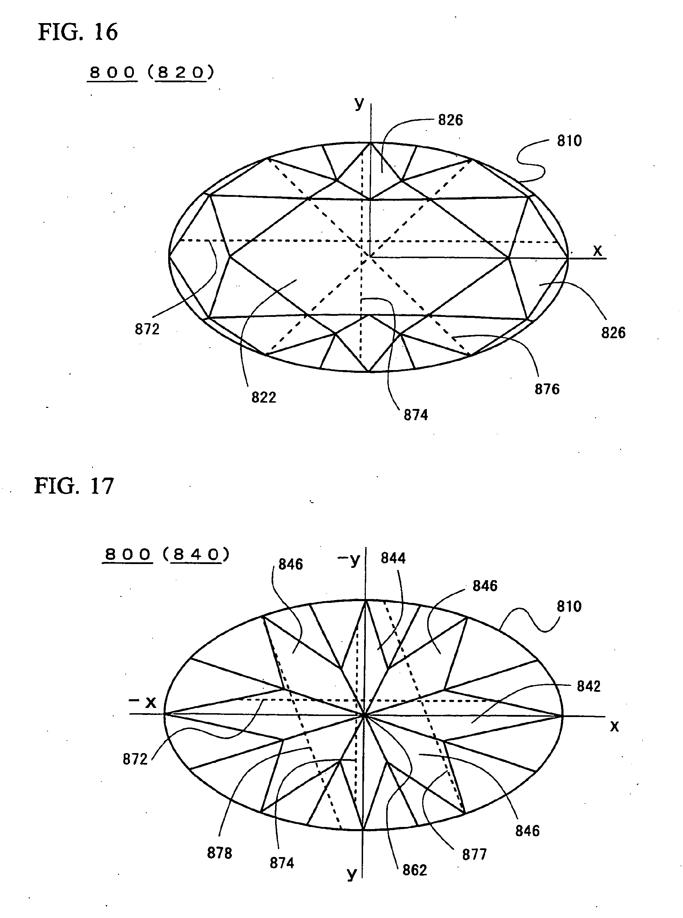

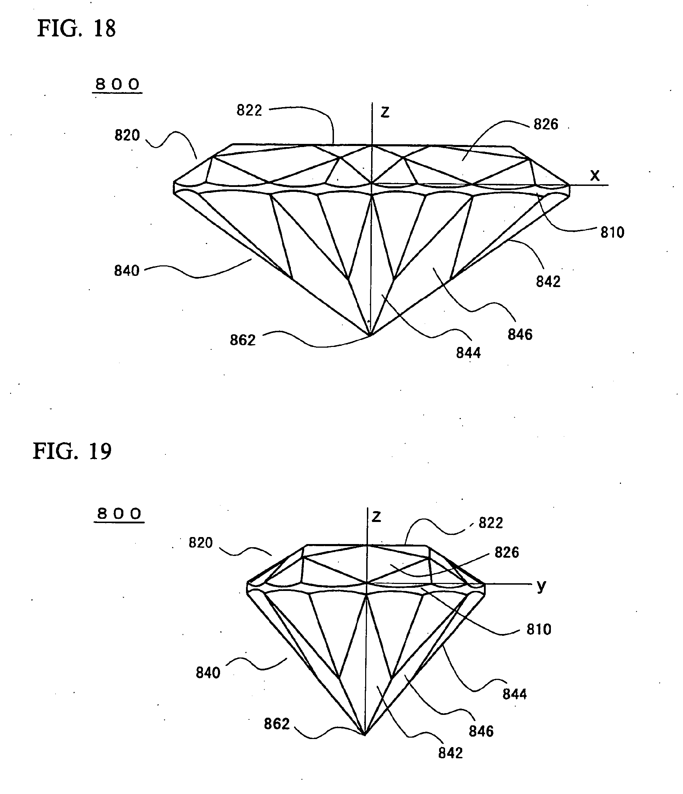

FIGS. 16 to 19 show an example of an oval-cut diamond obtained by flattening a girdle of a round brilliant cut diamond in the vertical direction. This is an oval-cut diamond 800 in a comparative example. FIGS. 16 and 17 are a top plan view and a bottom plan view, respectively. FIGS. 18 and 19 are a front view and a side view, respectively. As is apparent from FIGS. 18 and 19, the girdle 810 has a uniform height around the entire girdle circumference. In the crown 820, a table facet 822 is flat in the y-axis direction with all crown main facets 826 having the same crown angle (c). In a pavilion 840, pavilion main facets 842, 844 and 846 are formed of a tetragon having a culet 862 and a point on a girdle lower ridge constituting opposite vertexes. Thus, the two pavilion main facets 842 extending in the x-axis direction have a smaller pavilion angle. The two pavilion main facets 844 extending in the y-axis direction have a larger pavilion angle. The two pavilion main facets 846 provided between the x and y-axis directions have a pavilion angle of a value between the pavilion angle of the x-axis-wise pavilion main facets 842 and the pavilion angle of the y-axis-wise pavilion main facets 844. The x-axis-wise pavilion main facet 842 extends toward the central axis (z-axis) passing through the bottom apex 862, that is, the perpendicular of the pavilion main facet 842 crosses the central axis. The y-axis-wise pavilion main facet 844 extends toward the central axis (z-axis) passing through the bottom apex 862, that is, the perpendicular of the pavilion main facet 844 crosses the central axis. However, the perpendicular of the pavilion main facet 846 does not extend toward the central axis (z-axis).

Accordingly, in the x-axis direction, a common vertical plane (shown by thick broken lines in FIGS. 16 and 17) 872 is located in the pair of crown main facets 826 disposed opposite each other with respect to the central axis, in the pair of pavilion main facets 842 disposed opposite each other with respect to the central axis, and in the table facet 822. In the y-axis direction, a common vertical plane 874 is located in the pair of crown main facets 826 disposed opposite each other with respect to the central axis, in the pair of pavilion main facets 844 disposed opposite each other with respect to the central axis, and in the table facet 822. However, in the direction between the x-axis and the y-axis, a common vertical plane 876 is located in the pair of crown main facets 826 disposed opposite each other with respect to the central axis and the table facet 822, whereas the pavilion main facets 846 do not internally have the vertical plane 876 and do not extend perpendicularly to the central axis. As shown in FIG. 17, a vertical plane 877 in the pavilion main facet 846 between the x-axis and the y-axis does not coincide with a vertical plane 878 in the pavilion main facet 846 between the -x-axis and -y-axis.

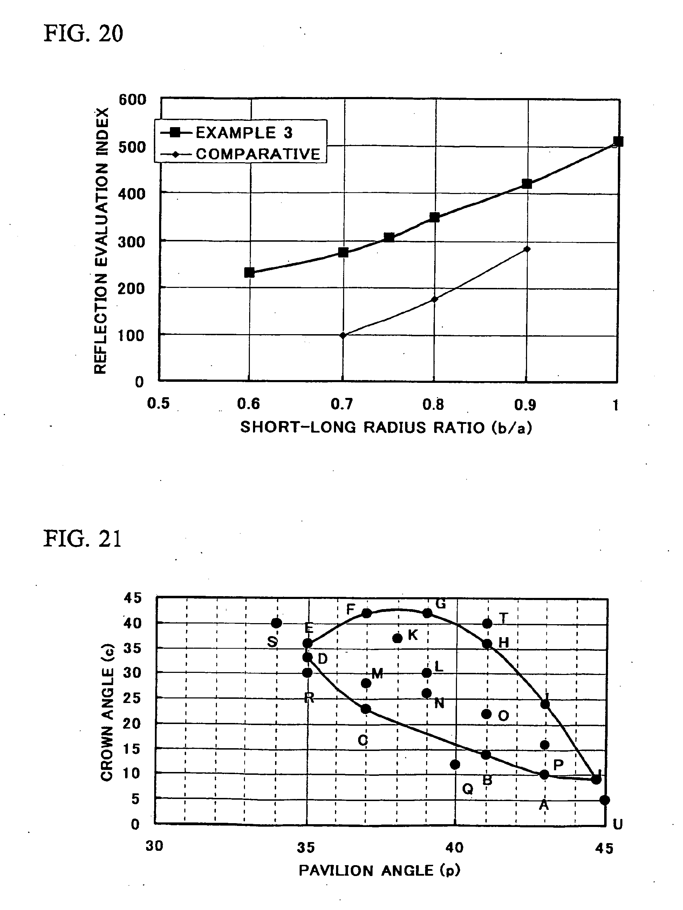

FIG. 20 is a graph showing reflection evaluation indices for the oval-cut diamond 300 in EXAMPLE 3 and the oval-cut diamond 800 in the comparative example described above. In FIG. 20, the axis of abscissa indicates the short-long radius ratio (b/a). The axis of ordinate indicates reflection evaluation indices for the diamonds in EXAMPLE 3 and comparative example determined by varying the short-long radius ratio (b/a). The diamond 300 in EXAMPLE 3 has a pavilion angle of 38.5 degrees and a crown angle of 27.92 degrees. The diamond 800 in the comparative example has a long axis-side pavilion angle of 38.5 degrees and a crown angle of 27.92 degrees. As is apparent from the graph, at a short-long radius ratio (b/a) of 0.7, the diamond 300 in EXAMPLE 3 exhibits a reflection evaluation index of about 280, while the diamond in the comparative example exhibits a reflection evaluation index of about 100. The value for EXAMPLE 3 accounts for 280% of that for the comparative example. At a short-long radius ratio (b/a) of 0.8, the diamond 300 in EXAMPLE 3 exhibits a reflection evaluation index of about 350, while the diamond in the comparative example exhibits a reflection evaluation index of about 170. The value for EXAMPLE 3 is about double that for the comparative example.

At a short-long radius ratio of less than 0.6, the oval-cut diamond may be very elongate and exhibit a facet difficult to machine. This requires the short-long radius ratio to be at least 0.6. Moreover, as shown in FIG. 20, although a round brilliant cut diamond (short-long radius ratio (b/a): 1.0) has a reflection evaluation index of about 500, an oval-cut diamond exhibits a reflection evaluation index of less than 250 at a short-long radius ratio of 0.6 to shine less brilliantly. The oval-cut diamond exhibits a reflection evaluation index of at least 250 at a short-long radius ratio of at least 0.7 to shine more brilliantly. Thus, the oval-cut diamond needs to have a short-long radius ratio of at least 0.6. By contrast, as the short-long radius ratio (b/a) approaches 1.0, the diamond becomes close to a round brilliant cut, eliminating the application of the present invention. This requires the short-long radius ratio (b/a) to be less than 0.95.

### Range of the Pavilion Angle (p) and Crown Angle (c)

Table 2 shows reflection evaluation indices for oval-cut diamond samples A to U (short-long radius ratio (b/a): 0.8) determined by varying the pavilion angle (p) and crown angle (c). FIG. 21 is a graph showing the pavilion angle (p) on the axis of ordinate and the crown angle (c) on the axis of abscissa for the samples. The present inventors' investigations show that the oval-cut diamond in the comparative example shown in FIGS. 16 to 19 (short-long radius ratio (b/a): 0.8) exhibits a maximum reflection evaluation index of about 250. Of the samples A to U in Table 2, the samples A to P exhibit a reflection evaluation index of at least 250. FIG. 21 shows the area of the pavilion angle (p) and crown angle (c) of the samples, enclosed by thick solid lines, as a preferable range according to the present invention. The preferable range of the pavilion angle (p) and crown angle (c) corresponds to an area enclosed by lines joining the following points (p, c) on a graph in which the axis of abscissa indicates the pavilion angle (p), while the axis of ordinate indicates the crown angle (c): (43 degrees, 10 degrees), (41 degrees, 14 degrees), (37 degrees, 23 degrees), (35 degrees, 33 degrees), (35 degrees, 36 degrees), (37 degrees, 42 degrees), (39 degrees, 42 degrees), (41 degrees, 36 degrees), (43 degrees, 24 degrees), and (44.7 degrees, 9 degrees).

**TABLE 2**

| Sample | Pavilion angle (p) | Crown angle (c) | Reflection evaluation index |
|---|---|---|---|
| A | 43 degrees | 10 degrees | over 250 |
| B | 41 | 14 | over 250 |
| C | 37 | 23 | over 250 |
| D | 35 | 33 | over 250 |
| E | 35 | 36 | 256 |
| F | 37 | 42 | 250 |
| G | 39 | 42 | 265 |
| H | 41 | 36 | 257 |
| I | 43 | 24 | 252 |
| J | 44.7 | 9 | over 250 |
| K | 38 | 37 | 326 |
| L | 39 | 30 | 314 |
| M | 37 | 28 | 313 |
| N | 39 | 26 | 357 |
| O | 41 | 22 | 330 |
| P | 43 | 16 | 313 |
| Q | 40 | 12 | 245 |
| R | 35 | 30 | 240 |
| S | 34 | 40 | 235 |
| T | 41 | 40 | 245 |
| U | 45 | 5 | 245 |

### EXAMPLE 4

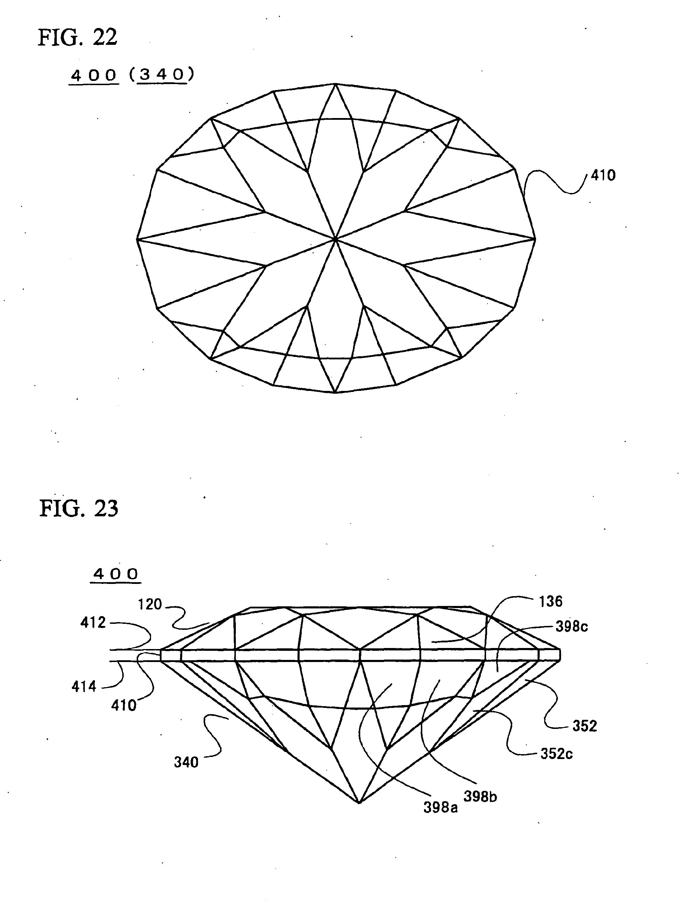

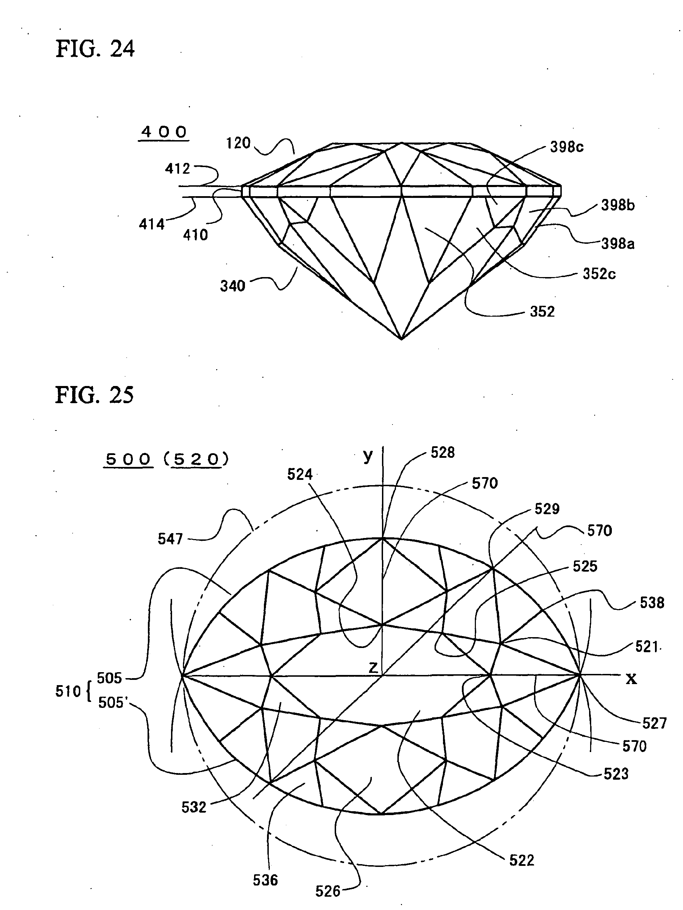

With reference to FIGS. 22 to 24, description will be given of an oval-cut diamond 400 in EXAMPLE 4 of the present invention. FIG. 22 is a bottom plan view of the diamond 400. FIG. 23 is a front view of the diamond 400. FIG. 24 is a side view of the diamond 400. The crown 120 of the diamond 400 is exactly the same as those in EXAMPLES 1 and 2. Accordingly, the top plan view of FIG. 1 also applies to the diamond 400. In these drawings and the following description, the same components as those of the diamond 100 in EXAMPLE 1 and the diamond 300 in EXAMPLE 3 are denoted by the same reference numerals. The diamond 400 has a columnar girdle 410, the crown 120 located above the girdle 410, and the pavilion 340 located below the girdle 410. The pavilion 340 has substantially the same structure as that of the pavilion of the diamond 300 in EXAMPLE 3.

A horizontal cross-section of the girdle 410 is shaped like a sixteen side polygon. The upper girdle facet 136 crosses an outer peripheral surface of the girdle 410 so as to form a straight line 412. The lower girdle facets 352 and 352c and adjusting facets 398a, 398b and 398c cross the outer peripheral surface of the girdle 410 so as to form a straight line 414. The girdle outer peripheral surface is sandwiched between the straight lines 412 and 414. The girdle is shaped like a column with sixteen sides. The distance between the straight lines 412 and 414 corresponds to the girdle height. The diamond 400 in EXAMPLE 4 is exactly the same as the diamond 300 in EXAMPLE 3 except for the shape of the girdle outer periphery. Accordingly, the girdle height in the diamond in EXAMPLE 4 is exactly the same as that in the diamond in EXAMPLE 3. However, in the diamond 400 in EXAMPLE 4, the intersecting line on which the upper girdle facets 136 cross the lower girdle facet and adjusting facets cross the outer peripheral surface of the girdle is a straight line instead of a circular sector as in the case of the diamond 300 in EXAMPLE 3. Accordingly, it would be appreciated that the girdle height has substantially the same value around the entire girdle circumference with reference to FIG. 23 and FIG. 24. The diamond 400 has the same crown and pavilion facet structures and thus the same reflection characteristics as those of the diamond 300.

### EXAMPLE 5

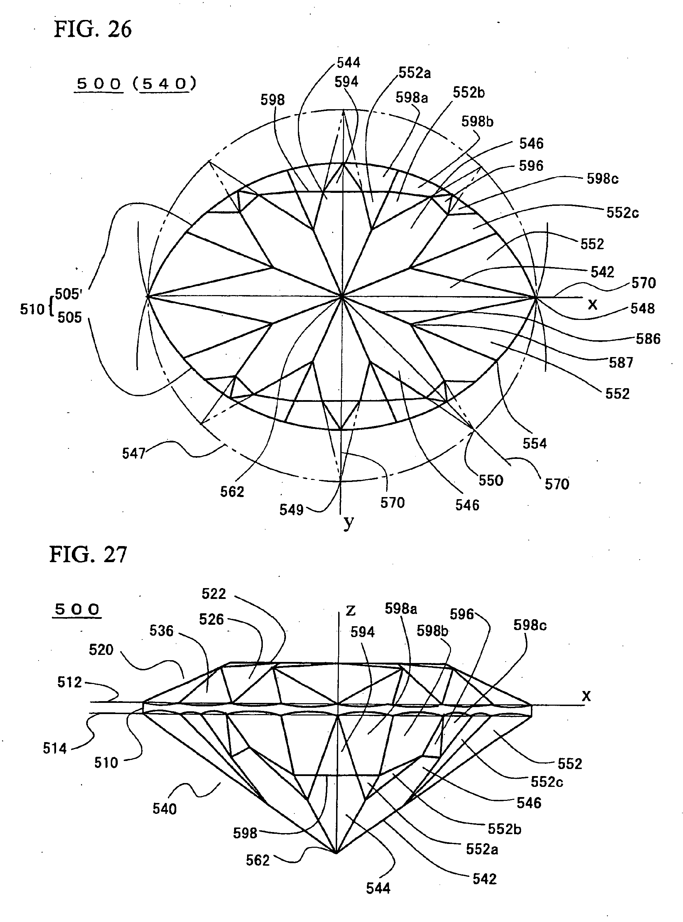

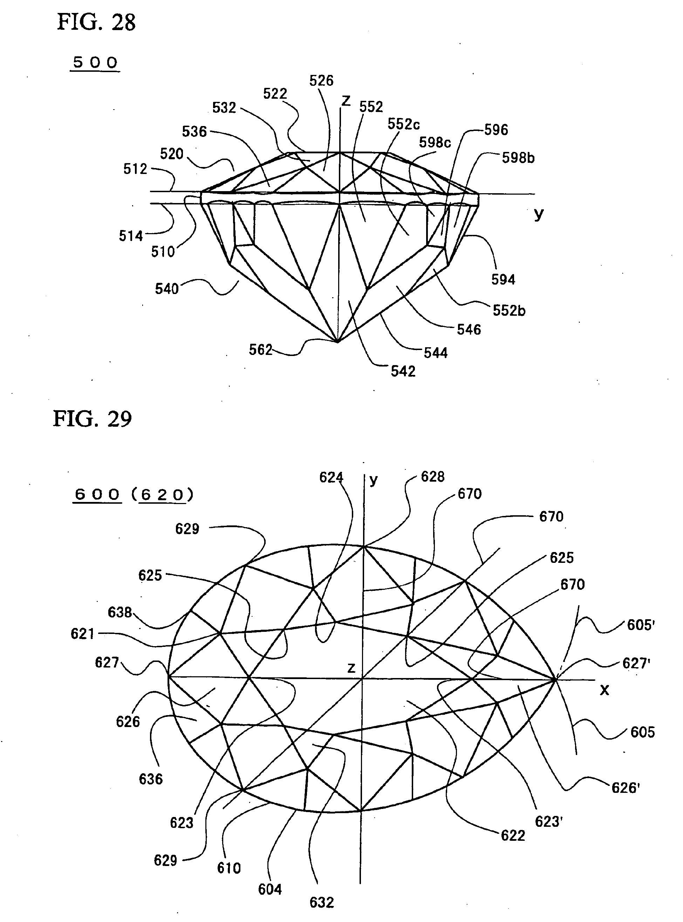

With reference to the drawings, description will be given of EXAMPLE 5 of an oval-cut diamond 500 of the present invention. The oval-cut diamond 500 in EXAMPLE 5 has a girdle 510 formed of two crossing elliptic or circular sectors and is generally called marquise. The girdle of this diamond has a contour line similar to an oval. The present invention is thus applicable to this diamond. FIG. 25 is a top plan view of the oval-cut diamond in EXAMPLE 5 of the present invention. FIG. 26 is a bottom plan view of the diamond. FIG. 27 is a front view of the diamond. FIG. 28 is a side view of the diamond. In these figures, the oval-cut diamond 500 has the columnar girdle 510, a crown 520 located above the girdle 510, and a pavilion 540 located below the girdle 510. The crown 520 has an octagonal table facet 522 at its top. FIG. 25 is a diagram showing the crown 520 as viewed from above. FIG. 26 is a diagram showing the pavilion 540 as viewed from below.

As is apparent from the top plan view shown in FIG. 25 and the bottom plan view shown in FIG. 26, the girdle 510 of the oval-cut diamond 500 in EXAMPLE 5 has a side which is composed of two circular sectors 505 and 505'.

Also in the description below, for convenience, the central plane contains the long axis of contour line of the girdle cross-section and is perpendicular to the table facet. Further, the central axis is a straight line which is located on the central plane and which crosses the table facet at right angles. In the present example, the central axis is located in the center of long axis of the contour line, that is, in the center of the octagonal table facet 522. The central axis is defined as a z-axis. The origin of the z-axis is located on an upper cross-section of the girdle, that is, a cross-section between the crown and the girdle. The x-axis is drawn in the long axis direction of the girdle from the origin. The y-axis is drawn in the short axis direction of the girdle from the origin. A bisector is drawn which almost equally divides the angle between the long and short axes into two. A respective eight-dividing plane 570 is a plane containing the central axis (z-axis) and extending in the direction of each of the x-axis, the bisector, and the y-axis.

With reference to FIGS. 25, 27 and 28, two opposite vertexes 523 of the table facet 522 are located on eight-dividing planes in an x-axis direction and in an -x-axis direction, that is, on the central plane. The other six vertexes 524 and 525 are symmetric with respect to the central plane. In FIG. 25, the table facet 522 is symmetric with respect to the y-axis. Accordingly, the two vertexes 524 are located on an eight-dividing plane containing the y-axis. In addition to the table facet 522, the crown 520 has eight tetragonal crown main facets 526, eight triangular star facets 532 and sixteen upper girdle facets 536.

The two opposite vertexes 523 of the table facet 522 are at substantially the same distance from the central axis (z-axis) on the central plane in the x-axis direction (long axis direction). The other two opposite vertexes 524 are at substantially the same distance from the central axis in the y-axis direction (short axis direction). The other four vertexes 525 are located in the direction of a bisector equally dividing the angle between the long axis and short axis into two, at substantially the same distance from the central axis, but not necessarily on the bisector.

The respective crown main facet 526 is a tetragon having opposite vertexes 527 and 523, 528 and 524, or 529 and 525 composed of the vertex 523, 524 or 525 of the table facet 522 and a point 527, 528 or 529 at which the corresponding one of the eight-dividing planes 170 crosses the upper ridge of the girdle 510, as well as other vertexes 521 shared by neighboring crown main facets 526. Each of the crown main facets 526 crosses the corresponding eight-dividing plane at right angles. The angle (crown angle (c)) between the crown main facet and the table facet is preferably the same for the eight crown main facets.

To form a crown main facet 526, a plane crossing each eight-dividing plane at right angles and having the same angle as the table facet is formed so as to pass through one of the vertexes of the table facet. A point at which the intersecting line between this plane and the eight-dividing plane crosses the girdle can be defined as a vertex on the girdle of the crown main facet. For example, for the crown main facet 526 located in the direction in which the angle between the x-axis and the y-axis is equally divided into two, the following plane is formed so as to pass through the vertex 525 of the table facet: the plane having a predetermined crown angle and crossing the eight-dividing plane located in the direction in which the angle between the x-axis and the y-axis is equally divided into two. The point 529 at which the intersecting line between the plane and the eight-dividing plane 570 crosses the girdle 510 is defined as a vertex on the girdle. The crown main facet 526 thus has the opposite vertexes 525 and 529. Seven other crown main facets 526 are similarly formed. Each vertex 521 is a point on the intersecting line between the neighboring crown main facets having the same depth from the table facet. The eight tetragonal crown main facets 526 thus formed cross the respective eight-dividing planes at right angles and have the same crown angle (c).

Each of the star facets 532 is a triangle having a bottom side coinciding with the corresponding side (for example, a segment 523-525) of the table facet 522, vertexes corresponding to the opposite ends 523 and 525 of the bottom side (for example, the segment 523-525), and another vertex corresponding to the point 521 shared by the two neighboring crown main facets 526 and 526.

Each of the upper girdle facets 536 has a bottom side coinciding with one (for example, 527-521) of the sides of the crown main facet 526 which has an end (for example, 527) on the upper ridge of the girdle 510, and a vertex (for example, 538) on the girdle upper ridge. The upper girdle facet 536 is normally triangular but may be shaped like an oval sector having an intersecting line with the girdle, which constitutes an ecliptic arc.

With reference to FIGS. 26 to 28, the pavilion 540 has a bottom apex 562, that is, a culet, at a lower end of its central axis. The area of the pavilion 540 between the bottom apex 562 and the lower ridge of the girdle 510 is shaped almost like an elliptic cone. The pavilion 540 has eight pavilion main facets 542, 544 and 546 and sixteen lower girdle facets 552.

The pavilion main facets 542, 544, and 546 extend from the bottom apex 562 toward the eight-dividing plane 570 between the bottom apex 562 and the lower ridge of the girdle 510. Each of the pavilion main facets 542, 544 and 546 is shaped like a tetragon or a part of a tetragon; the pavilion main facet 542 extends in the x-axis direction, the pavilion main facet 544 extends in the y-axis direction, and the pavilion main facet 546 extends in the direction in which the angle between the x-axis and the y-axis is equally divided into two. The neighboring pavilion main facets 542 and 546 share a side 586 having the bottom apex 562 at one end. The neighboring pavilion main facets 544 and 546 also share the side 586 having the bottom apex 562 at one end.

Each of the lower girdle facets 552 is a triangular or oval sector formed on the elliptic conical outer peripheral surface of the pavilion, between the pavilion main facet 542, 544 or 546 and the lower ridge of the girdle 510; the lower girdle facet 552 has a bottom side coinciding with one (for example, 548-587) of sides of the pavilion main facet which has one end on the girdle lower ridge, and a vertex (for example, 554) on the girdle lower ridge.

A circumscribed circle 547 circumscribing the girdle at a long axis end of the girdle 510 is drawn around the central axis (see FIG. 26). The eight-dividing planes 570 cross the circumscribed circle 547 at points 548, 549 and 550. Each of the pavilion main facets 542, 544 and 546 has opposite vertexes corresponding to the bottom apex 562 and the corresponding one of the points 548, 549 and 550. Each pavilion main facet crosses the corresponding eight-dividing plane 570 at right angles. The angle (pavilion angle (p)) between the pavilion main facet and the table facet is the same for all the pavilion main facts. Neighboring ones of the pavilion main facets 542, 544 and 546 share the side 586 having the bottom apex 562 at one end and the other end 587 of that side 586. As is apparent from FIG. 26, on the short axis side, the short radius of the girdle 510 is shorter than the radius of the circumscribed circle 547. Accordingly, a girdle-side tip of the short axis-side pavilion main facet 544 is cut to form a part of a tetragon.

With reference to FIG. 26, each of the lower girdle facets 552 has a side (segment 587-550) joining the other end 587 of the side 586 shared by the two neighboring pavilion main facets (for example, 542 and 546), to the interesting point 550 between the eight-dividing plane and the circumscribed circle 547. The lower girdle facet 552 has a vertex corresponding to the point 554 at which a plane equally diving the angle between the two neighboring eight-dividing planes 570 into two crosses the girdle 510. Thus, the lower girdle facet 552 is a triangular or oval sector sandwiched by the segment 587-550 and a segment 554-587.

In EXAMPLE 5, each of the pavilion main facets 542, 544 and 546 joins the bottom apex 562 of the central axis to the corresponding one of the points 548, 549 and 550 on the circumscribed circle 547. The angle (pavilion angle (p)) between the pavilion main facet and the table facet 522 is the same for all the pavilion main facets.

The diamond 500 has adjusting facets formed between the girdle lower ridge and each of the pavilion main facets 544 and 546 formed in the pavilion 540 and between the girdle lower ridge and each of the lower girdle facets 552a, 552b and 552c.

The adjusting facet is a triangular facet 594 which is located in a short axis-side pavilion main facet 544, close to the girdle and for which the angle between the triangular facet 594 and the table facet is slightly larger than the pavilion angle. The triangular facet 594 is formed between a pavilion main facet 544 shaped like a part of a tetragon and the girdle 510. A ridge 598 is formed of the line on which the pavilion main facet 544 crosses the adjusting facet 594. The distance from the zx-plane to the ridge 598 is preferably 0.5a to 0.6a in terms of the long radius (a). The ridge 598 traverses the lower girdle facets 552a located on the opposite sides of the pavilion main facet 544, the lower girdle facet 552b located between the pavilion main facet 546 disposed in the bisector direction and the lower girdle facet 552a, the pavilion main facet 546, and the neighboring lower girdle facet 552c. The ridge 598 subsequently crosses the girdle 510 before leaving the lower girdle facet 552c. The ridge 598 forms an adjusting facet 598a between the lower girdle facet 552a and the girdle 510, an adjusting facet 598b between the lower girdle facet 552b and the girdle 510, an adjusting facet 596 between the pavilion main facet 546 and the girdle 510, and an adjusting facet 598c between the lower girdle facet 552c and the girdle 510.

The adjusting facets 594, 598a, 598b, 596 and 598c are preferably formed so that the girdle height has substantially the same value around the entire girdle circumference. As shown in the front view in FIG. 27 and the side view in FIG. 28, the lower end center of each upper girdle facet 536 projects from the ridge between the girdle 510 and the crown 520 toward the girdle. The upper end centers of the lower girdle facets 552 and 552c and adjusting facets 598a, 598b, 598c project from the ridge between the girdle 510 and the pavilion 540 toward the girdle. In those parts, the girdle height appears to be smaller. However, this is because the oval outer peripheral surface of the girdle results in the projection, toward the girdle, of the lower end center of the upper girdle facet, the lower end center of the lower girdle facet, and the lower end center of the adjusting facet. Here, the girdle height is defined by the distance between a straight line 512 joining the girdle to the ridges between the upper girdle facets and the ridges between the upper girdle facets and the crown main facets and a straight line 514 joining the girdle to the ridges between the lower girdle facets, the ridges between the lower girdle facets and the pavilion main facets, and the ridges between the adjusting facets. This enables the girdle height to be substantially fixed around the entire girdle circumference. Further, the upper and lower ends of the girdle which enclose the girdle to constitute its outer peripheral surface are desirably composed of straight lines. However, the girdle height can be varied by up to about 15% of the long radius (a) as required for facet polishing.

In the diamond 500 in EXAMPLE 5, like the diamond 100 in EXAMPLE 1, the angle (crown angle (c)) between the crown main facet 526 and the table facet 522 is the same for all the crown main facets 526. The angle (pavilion angle (p)) between the pavilion main facet and the table facet 522 is the same for all the pavilion main facets 542, 544 and 546. Moreover, the adjusting facet provided on the short radius side of the pavilion makes the girdle height substantially the same around the entire girdle circumference as shown in FIGS. 27 and 28. This improves the appearance of the diamond. Reflected light also exits an area of the table facet which is close to its short axis-side periphery. This allows the diamond to appear to shine brightly.

The oval-cut diamond 500 has four pairs each of two pavilion main facets located opposite each other across the central axis. The pairs each consisting of two pavilion main facets located opposite each other across the central axis include a pair of two pavilion main facets 542 extending in the x-axis direction, a pair of two pavilion main facets 544 extending in the y-axis direction, and two pairs each of two pavilion main facets 546 extending in the bisector direction. The diamond further has four pairs each of two crown main facets located opposite each other across the central axis. The pairs each consisting of crown main facets located opposite each other across the central axis include a pair of two crown main facets extending in the x-axis direction, a pair of two crown main facets extending in the y-axis direction, and two pairs each of two crown main facet extending in the bisector direction. The pavilion main facets in each pair sit opposite the corresponding crown main facets across the girdle. Specifically, the pavilion main facets in the pavilion main facet pair extending in the x-axis direction sit opposite the respective crown main facets in the crown main facet pair extending in the x-axis direction. The pavilion main facets in the pavilion main facet pair extending in the y-axis direction sit opposite the respective crown main facets in the crown main facet pair extending in the y-axis direction. This also applies to the pavilion and crown main facet pairs extending in the bisector direction. The pavilion and crown main facet pairs sitting opposite each other across the girdle have a common vertical plane within the facets. The vertical plane crosses the table facet at right angles in the table facet. The common vertical plane of these facets makes the oval-cut diamond of the present invention more brilliant.

Table 3 shows reflection evaluation indices obtained for oval-cut diamonds in EXAMPLE 5 (short-long radius ratio (b/a): 0.8). As is apparent from Table 3, these diamonds exhibit reflection evaluation indices of 402 and 321 and are more brilliant than diamonds in the comparative example described above.

**TABLE 3**

| Sample | Short-long radius ratio (b/a) | Pavilion angle (p) | Crown angle (c) | Reflection evaluation index |
|---|---|---|---|---|
| 3 | 0.8 | 39 degrees | 22 degrees | 402 |
| 4 | 0.8 | 41 degrees | 24 degrees | 321 |

### EXAMPLE 6

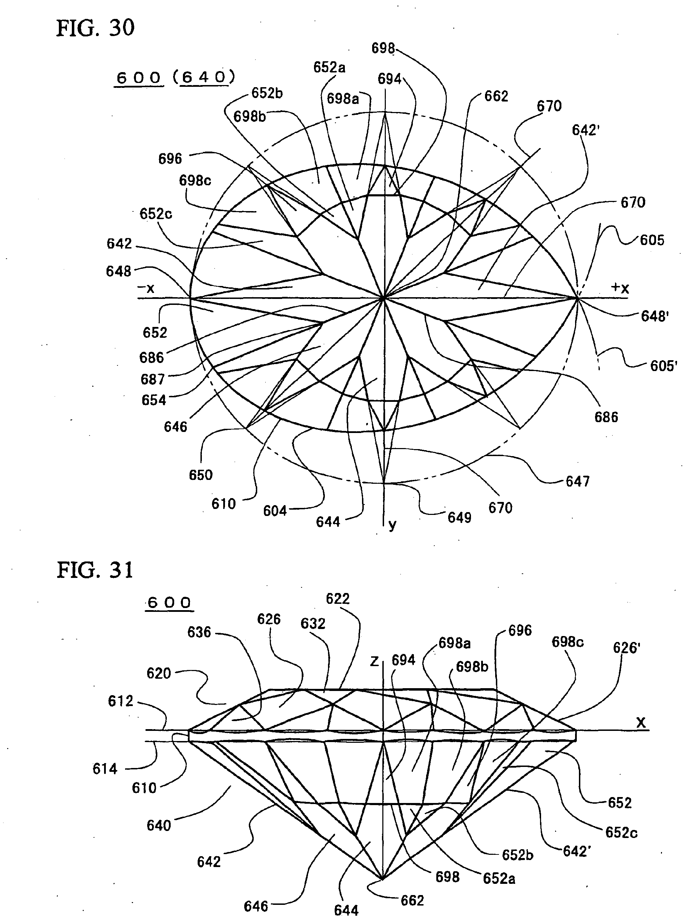

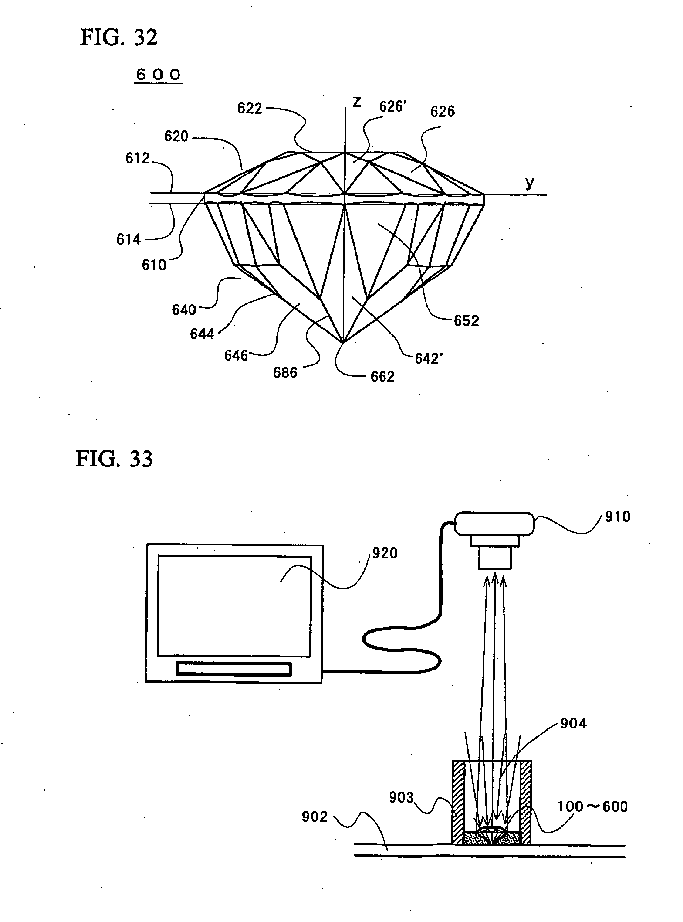

EXAMPLE 6 of oval-cut diamond of the present invention will be described below in detail with reference to the drawings. An oval-cut diamond 600 in EXAMPLE 6 has a girdle 610 formed of a combination of three oval sectors (or circular sectors) and is generally called a "pair shape". The girdle of this diamond has a contour line similar to an oval. The present invention is thus applicable to this diamond. FIG. 29 is a top plan view of the oval-cut diamond in EXAMPLE 6. FIG. 30 is a bottom plan view of the diamond. FIG. 31 is a front view of the diamond. FIG. 32 is a side view of the diamond. In these figures, the oval-cut diamond 600 has a columnar girdle 610, a crown 620 located over the girdle 610, and a pavilion 640 located under the girdle 610. The crown 620 has an octagonal table facet 622 at its top. FIG. 29 is a diagram of the crown 620 as viewed from above. FIG. 30 is a diagram of the pavilion 640 as viewed from below. In FIGS. 29 and 30, the girdle 610 forms an oval sector 604 on the left side of the y-axis. The girdle 610 forms crossing circular sectors 605 and 605' on the right side of the y-axis.

Also in the description below, for convenience, the central plane contains the long axis of contour line of the girdle cross-section and is perpendicular to the table facet. Further, the central axis is a straight line which is located on the central plane and which crosses the table facet at right angles. In the figures, the central axis is located in the center of long axis of the contour line. The central axis is defined as a z-axis. The origin of the z-axis is located on an upper cross-section of the girdle, that is, a cross-section between the crown and the girdle. The x-axis is drawn in the long axis direction of the girdle from the origin. The y-axis is drawn in the short axis direction of the girdle from the origin. A bisector is drawn which almost equally divides the angle between the long and short axes into two. A respective eight-dividing plane 670 is a plane containing the central axis (z-axis) and extending in the direction of each of the x-axis, the bisector and the y-axis.

With reference to FIGS. 29, 31 and 32, two opposite vertexes 623 and 623' of the table facet 622 are located on the eight-dividing planes in the x-axis direction and in the -x-axis direction, that is, on the central plane. The other six vertexes 624 and 625 are symmetric with respect to the central plane. In addition to the table facet 622, the crown 620 has eight tetragonal crown main facets 626, eight triangular star facets 632, and sixteen upper girdle facets 636.

The crown main facets 626 are tetragons having opposite vertexes 627 and 623, 628 and 624, and 629 and 625, respectively, composed of the vertexes 623, 624 and 625 of the table facet 622 and points 627, 628, and 629 at each of which the corresponding one of the eight-dividing planes 670 crosses the upper ridge of the girdle 610, as well as vertexes 621 shared by neighboring crown main facets 626. A crown main facet 626' located in the x-axis direction has opposite vertexes composed of a point 627' on upper ridge of the girdle 610 and a vertex 623' of the table facet. Each of the crown main facets 626 and 626' crosses the corresponding eight-dividing plane at right angles. The angle (crown angle (c)) between the crown main facet and the table facet is preferably the same for the eight crown main facets.

To form a crown main facet 626, a plane crossing each eight-dividing plane at right angles and having the same angle with the table facet is formed so as to pass through one of the vertexes of the table facet. A point at which the intersecting line between this plane and the eight-dividing plane crosses the girdle can be defined as a vertex on the girdle of the crown main facet. For example, for the crown main facet 626 located in the direction in which the angle between the x-axis and the y-axis is equally divided into two, the following plane is formed so as to pass through the vertex 625 of the table facet: the plane having a predetermined crown angle and crossing the eight-dividing plane located in the direction in which the angle between the x-axis and the y-axis is equally divided into two. The point 629 at which the intersecting line between this plane and the eight-dividing plane 670 crosses the girdle 610 is defined as a vertex on the girdle. The crown main facet 626 thus has the opposite vertexes 625 and 629. Seven other crown main facets 626 are similarly formed. Each of the other vertexes 621 is a point on the intersecting line between the neighboring crown main facets having the same depth from the table facet. The eight tetragonal crown main facets 626 thus formed cross the respective eight-dividing planes at right angles and have the same crown angle (c).

Each of the star facets 632 is a triangle having a bottom side coinciding with the corresponding side (for example, a segment 623-625) of the table facet 622, vertexes corresponding to the opposite ends 623 and 625 of the bottom side, and another vertex corresponding to the point shared by the two neighboring crown main facets 626 and 626.

Each of the upper girdle facets 636 has a bottom side coinciding with one (for example, 627-621) of the sides of the crown main facet 626 which has an end (for example, 627) on the upper ridge of the girdle 610, and a vertex (for example, 638) on the girdle upper ridge. The upper girdle facet 636 is normally triangular but may be shaped like an oval sector having an intersecting line on the girdle, which constitutes an ecliptic arc.

With reference to FIGS. 30 to 32, the pavilion 640 has a bottom apex 662, that is, a culet, at a lower end of its central axis. The area of the pavilion 640 between the bottom apex 662 and the lower ridge of the girdle 610 is shaped almost like an elliptic cone. The pavilion 640 has eight pavilion main facets 642, 644 and 646 and sixteen lower girdle facets 652.

The pavilion main facets 642, 642', 644 and 646 extend from the bottom apex 662 toward the eight-dividing plane 670 between the bottom apex 662 and the lower ridge of the girdle 610. Each of the pavilion main facets 642, 644 and 646 is shaped like a tetragon or a part of a tetragon; the pavilion main facet 642 extends in the -x-axis direction, the pavilion main facet 644 extends in the y-axis direction, and the pavilion main facet 646 extends in the direction in which the angle between the x-axis and the y-axis is equally divided into two. The pavilion main facet 642' is a tetragon extending in the x-axis direction from the bottom apex 662. Each of the pavilion main facets 642 and 642' shares a side 686 having the bottom apex 662 at one end, with the neighboring pavilion main facet 646. The other neighboring pavilion main facets 644 and 646 also share the side 686 having the bottom apex 662 at one end.

Each of the lower girdle facets 652 is a triangular or oval sector formed on the elliptic conical outer peripheral surface of the pavilion, between the pavilion main facet 642, 642', 644, or 646 and the lower ridge of the girdle 610; the lower girdle facet 652 has a bottom side coinciding with one (for example, 648-687) of sides of the pavilion main facet which has one end on the girdle lower ridge, and a vertex (for example, 654) on the girdle lower ridge.

A circumscribed circle 647 circumscribing the girdle at a long axis end of the girdle 610 is drawn around the central axis (see FIG. 30). The eight-dividing planes 670 cross the circumscribed circle 647 at points 648, 648', 649 and 650. Each of the pavilion main facets 642, 644 and 646 has opposite vertexes corresponding to the bottom apex 662 and the corresponding one of the points 648, 649 and 650. Neighboring ones of the pavilion main facets 642, 644 and 646 share the side 686 having the bottom apex 662 at one end and the other end 687 of that side 686. Thus, each pavilion main facet has a diagonal line joining the opposite vertexes corresponding to the point on the circumference of the circumscribed circle 647 and the bottom apex 662. The angle (pavilion angle) between the diagonal line and the table facet is substantially the same for all the pavilion main facets. Each pavilion main facet is also perpendicular to the corresponding eight-dividing plane 670. As is apparent from FIG. 30, on the short axis side, the short radius of the girdle 610 is shorter than the radius of the circumscribed circle 647. Accordingly, a girdle-side tip of the short axis-side pavilion main facet 644 is cut to form a part of a tetragon.

In the above description, the eight pavilion main facets have the same pavilion angle (p). However, the angle (pavilion angle) between the x-axis-side pavilion main facet 642' and the table facet may be smaller or larger than the pavilion angle of the other pavilion main facets. In this case, the seven pavilion main facet, that is, all the pavilion main facet except the x-axis-side one 642', have respective vertexes on the circumscribed circle 647 and also have the same pavilion angle. However, the x-axis-side pavilion main facet 642' may have a smaller or larger pavilion angle than these seven pavilion main facets.

With reference to FIG. 30, each of the lower girdle facets 652 has a side (segment 687-650) joining the other end 687 of the side 686 shared by the two neighboring pavilion main facets (for example, 642 and 646), to the interesting point 650 between the eight-dividing plane and the circumscribed circle 647. The lower girdle facet 652 has a vertex corresponding to the point 654 at which a plane equally dividing the angle between the two neighboring eight-dividing planes into two crosses the girdle 610. Thus, the lower girdle facet 652 is a triangular or oval sector sandwiched by the segment 687-650 and a segment 654-687.

The diamond 600 has adjusting facets formed between the girder lower ridge and each of the pavilion main facets 644 and 646 formed in the pavilion 640 and between the girdle lower ridge and each of the lower girdle facets 652a, 652b, and 652c.

The adjusting facet is a triangular facet 694 which is located in a short axis-side pavilion main facet 644, close to the girdle and for which the angle between the triangular facet 694 and the table facet is slightly larger than the pavilion angle. The triangular facet 694 is formed between a pavilion main facet 644 shaped like a part of a tetragon and the girdle 610. A ridge 698 is formed of the line on which the pavilion main facet 644 crosses the adjusting facet 694. The distance from the zx-plane to the ridge 698 is preferably 0.5a to 0.6a in terms of the long radius (a). The ridge 698 traverses the lower girdle facets 652a located on the opposite sides of the pavilion main facet 644, the lower girdle facet 652b located between the pavilion main facet 646 disposed in the bisector direction and the lower girdle facet 652a, the pavilion main facet 646, and the neighboring lower girdle facet 652c. The ridge 698 subsequently crosses the girdle 610 before leaving the lower girdle facet 652c. The ridge 698 forms an adjusting facet 698a between the lower girdle facet 652a and the girdle 610, an adjusting facet 698b between the lower girdle facet 652b and the girdle 610, an adjusting facet 696 between the pavilion main facet 646 and the girdle 610, and an adjusting facet 698c between the lower girdle facet 652c and the girdle 610. The adjusting facet provided on the short radius side of the pavilion allows reflected light to exit an area of the table facet which is close to its short axis-side periphery. This allows the diamond to shine brightly.

The adjusting facets 694, 698a, 698b, 696 and 698c are preferably formed so that the girdle height has substantially the same value around the entire girdle circumference. As shown in the front view in FIG. 31 and the side view in FIG. 32, the lower end center of each upper girdle facet 636 projects from the ridge between the girdle 610 and the crown 620 toward the girdle. The upper end centers of the lower girdle facets 652 and 652c and adjusting facets 698a, 698b, 698c project from the ridge between the girdle 610 and the pavilion 640 toward the girdle. In those parts, the girdle height appears to be smaller. However, this is because the oval outer peripheral surface of the girdle results in the projection, toward the girdle, of the lower end center of the upper girdle facet, the lower end center of the lower girdle facet, and the lower end center of the adjusting facet. Here, the girdle height is defined by the distance between a straight line 612 joining the girdle to the ridges between the upper girdle facets and the ridges between the upper girdle facets and the crown main facets and a straight line 614 joining the girdle to the ridges between the lower girdle facets, the ridges between the lower girdle facets and the pavilion main facets, and the ridges between the adjusting facets. This enables the girdle height to be substantially fixed around the entire girdle circumference. Further, the upper and lower ends of the girdle which enclose the girdle to constitute its outer peripheral surface are desirably composed of straight lines. Thus, the beautiful appearance of the diamond results from the substantially the same girdle height around the entire girdle circumference. However, the effects of the present invention can be exerted even if the points at which the girdle crosses the ridges between the upper and lower girdle facets or the ridges between these facets and the crown/pavilion main facets are displaced upward or downward from the straight line 612 or 614 by up to about 15% of the long radius (a). The displacement at this level may be necessary for facet polishing.

The oval-cut diamond 600 has four pairs each of two pavilion main facets located opposite each other across the central axis. The pairs each consisting of two pavilion main facets located opposite each other across the central axis include a pair of two pavilion main facets 642 and 642' extending in the x-axis direction, a pair of two pavilion main facets 644 extending in the y-axis direction, and two pairs each of two pavilion main facets 646 extending in the bisector direction. The diamond further has four pairs each of two crown main facets located opposite each other across the central axis. The pairs each consisting of crown main facets located opposite each other across the central axis include a pair of two crown main facets extending in the x-axis direction, a pair of two crown main facets extending in the y-axis direction, and two pairs each of two crown main facet extending in the bisector direction. The pavilion main facets in each pair sit opposite the corresponding crown main facets across the girdle. Specifically, the pavilion main facets in the pavilion main facet pair extending in the x-axis direction sit opposite the respective crown main facets in the crown main facet pair extending in the x-axis direction. The pavilion main facets in the pavilion main facet pair extending in the y-axis direction sit opposite the respective crown main facets in the crown main facet pair extending in the y-axis direction. This also applies to the pavilion and crown main facet pairs extending in the bisector direction. The pavilion and crown main facet pairs sitting opposite each other across the girdle have a common vertical plane in the facets. The vertical plane crosses the table facet at right angles in the table facet. The common vertical plane of these facets makes the oval-cut diamond of the present invention more brilliant.

Table 4 shows reflection evaluation indices obtained for oval-cut diamonds in EXAMPLE 6 (short-long radius ratio (b/a): 0.67). As is apparent from Table 4, these diamonds exhibit reflection evaluation indices of 485 and 513 and are more brilliant than diamonds in the comparative example described above.

**TABLE 4**

| Sample | Short-long radius ratio (b/a) | Pavilion angle (p) | Crown angle (c) | Reflection evaluation index |
|---|---|---|---|---|
| 5 | 0.67 | 39 degrees | 26 degrees | 485 |
| 6 | 0.67 | 41 degrees | 24 degrees | 513 |

The oval-cut diamonds constructed as described in the EXAMPLES of the present example were observed for their reflected light patterns. Then, a significant reflected light pattern appeared in the table facet and each crown facet. The observation was carried out with the table facet on a plate 902 as shown in FIG. 33, and the oval-cut diamonds constructed as described in the EXAMPLES of the present example were observed for their reflected light patterns. Then, a significant reflected light pattern appeared in the table facet and each crown facet. Each diamond was placed on the plate with its table facet facing upward. With ambient light blocked by a cylinder 903, the oval-cut diamond 100 to 600 was irradiated with light 904 through its table facet and crown facets at an angle of 20 degrees to 45 degrees to its central axis. A digital camera 910 can be used to pick up an image of a reflected pattern appearing on the pavilion after reflection inside the diamond 100 to 600. The image can then be observed on a CRT 920 or printed for observation. The intensity of the reflected light can be measured directly or on a printed image using an optical sensor. Then, the cylinder 903 is removed. The diamond 100 to 600 is irradiated with light at an angle of 0 degrees to 90 degrees to its central axis. The reflected pattern obtained is similarly observed to measure the intensity of the reflected light. The measured intensities of the reflected light are averaged to obtain a reflected light intensity.

As also described in EXAMPLES, the present invention is applicable not only to oval-cut diamonds in which a contour line of a girdle cross-section which is parallel to a table facet is oval but also to diamonds such as marquise and pair shape in which the contour line has a shape similar to an oval.

## Claims

1. An oval-cut diamond (100, 200, 300, 400, 500, 600) comprising a columnar girdle (110, 210, 310, 410, 510, 610), a crown (120, 520, 620) provided above the girdle (110, 210, 310, 410, 510, 610) and having an octagonal table facet (122, 522, 622) on a top of the crown (120, 520, 620) and a pavilion (140, 340, 540, 640) provided below the girdle (110, 210, 310, 410, 510, 610);
the girdle (110, 210, 310, 410, 510, 6 10) having an upper ridge between the crown (120, 520, 620) and the girdle (110, 210, 310, 410, 510, 610), a lower ridge between the pavilion (140, 340, 540, 640) and the girdle (110, 210, 310, 410, 510, 610) and a contour line of a girdle cross-section, parallel to the table facet (122, 522, 622), being in an oval or oval-like shape;
wherein the diamond (100, 200, 300, 400, 500, 600) has:
a central plane containing a long axis of the contour line and being a plane vertical to the table facet (122, 522, 622),
a straight central axis crossing vertically the table facet (122, 522, 622) on the central plane,
and
eight-dividing planes (170, 570, 670) composed of the central plane, a plane containing a short axis of the contour line of the girdle cross-section and the central axis and planes dividing an angle around the central axis between the plane containing the short axis and the central axis and the central plane equally into two;
the table facet (122, 522, 622) having two opposite vertexes (123, 523, 623, 623') on the central plane and six vertexes (124, 125, 524, 525, 624, 625) symmetrical with respect to the central plane;
the crown (120, 520, 620) having eight tetragonal crown main facets (126, 526, 626, 626'), eight triangular star facets (132, 532, 632) and sixteen upper girdle facets(136, 536, 636) on a diamond circumference between the girdle upper ridge and the table facet (122, 522, 622);
wherein each of the crown main facets (126, 526, 626, 626') is a tetragon having two opposite vertexes composed of a point (127, 128, 129, 527, 528, 529, 627, 627', 628, 629), at which each of the eight-dividing planes (170, 570, 670) crosses the girdle upper ridge, and each vertex (123, 124, 125, 523, 524, 525, 623, 623', 624, 625) of the table facet (122, 522, 622), and other vertexes (121, 521, 621) each owned jointly with each of two other crown main facets (126, 526, 626, 626') neighboring on the crown main facet (126, 526, 626, 626');
each of the star facets (132, 532, 632) is a triangle having a bottom side coinciding with each side (123-125, 523-525, 623-625) of the table facet (122, 522, 622) and an opposite vertex coinciding with each of the other vertexes (121, 521, 621) jointly owned by two neighboring crown main facets (126, 526, 626, 626') each having a vertex (123, 125, 523, 525, 623, 625) at each end of the bottom side (123-125, 523-525, 623-625); and
each of the upper girdle facets (136, 536, 636) is a triangle or an oval sector having a bottom side coinciding with a side (127-121, 527-521, 627-621), whose end (127, 527, 627) is on the girdle upper ridge, among sides of the crown main facets (126, 526, 626, 626') and a vertex (138, 538, 638) on the girdle upper ridge;
the pavilion (140, 340, 540, 640) having a bottom apex (162, 562, 662) at a lower end of the central axis, and eight pavilion main facets (142, 144, 146, 342, 344, 346, 542, 544, 546, 642, 642', 644, 646) and sixteen lower girdle facets (152, 352, 352a, 352b, 352c, 552, 552a, 552b, 552c, 652, 652a, 652b, 652c) on the diamond circumference between the bottom apex (162, 562, 662) and the girdle lower ridge;
wherein each of the pavilion main facets (142, 144, 146, 342, 344, 346, 542, 544, 546, 642, 642', 644, 646) is a tetragon or a part of a tetragon extending from the bottom apex (162, 562, 662) toward a crossing point of each of the eight-dividing planes (170, 570, 670) with the girdle lower ridge on the diamond circumference between the bottom apex (162, 562, 662) and the girdle lower ridge, and having a side (186, 586, 686), whose end coincides with the bottom apex (162, 562, 662), jointly owned with each of two other pavilion main facets (142, 144, 146, 342, 344, 346, 542, 544, 546, 642, 642', 644, 646) neighboring on the pavilion main facet (142, 144, 146, 342, 344, 346, 542, 544, 546, 642, 642', 644, 646);
each of the lower girdle facets (152, 352, 352a, 352b, 352c, 552, 552a, 552b, 552c, 652, 652a, 652b, 652c) formed between the pavilion main facets (142, 144, 146, 342, 344, 346, 542, 544, 546, 642, 642', 644, 646) and the girdle lower ridge is a triangle or an oval sector having a bottom side coinciding with a side (148-187, 548-587, 648-687) having an end on the girdle lower ridge among sides of each of the pavilion main facets (142, 144, 146, 342, 344, 346, 542, 544, 546, 642, 642', 644, 646) and a vertex (154, 554, 654) on the girdle lower ridge;
and
each of the lower girdle facets (152, 352, 352a, 352b, 352c, 552, 552a, 552b, 552c, 652, 652a, 652b, 652c) is disposed on each of both sides of each of the pavilion main facets (142, 144, 146, 342, 344, 346, 542, 544, 546, 642, 642', 644, 646);
**characterized in that** the oval or oval-like shape formed by the contour line of the girdle cross-section has a ratio of a short radius to a long radius (b/a) of 0.6 or more, in which a radius in a long axis direction of the shape (hereinafter, referred to as "long radius") is denoted as "a", and a radius in a short axis direction of the shape (hereinafter, referred to as "short radius") is denoted as "b",
that the diamond (100, 200, 300, 400, 500, 600) has a circumscribed circle (147, 547, 647) having a center on the central axis and circumscribing the contour line at an end of the long axis, that each of at least seven pavilion main facets (142, 144, 146, 342, 344, 346, 542, 544, 546 642, 642', 644, 646) among the pavilion main facets (142, 144, 146, 342, 344, 346, 542, 544, 546, 642, 642', 644, 646) is formed with opposite vertexes composed of a crossing point (148, 149, 150, 548, 549, 550, 648, 648', 649, 650) of each of the eight dividing planes (170, 570, 670) with the circumscribed circle (147, 547, 647) and the bottom apex (162,562,662); and
that each pair of four pairs of pavilion main facets (142, 144, 146, 342, 344, 346, 542, 544, 546, 642, 642', 644, 646), of which each pair is composed of two pavilion main facets (142, 144, 146, 342, 344, 346, 542, 544, 546, 642, 642', 644, 646) positioned opposite to each other with respect to the central axis, has two crown main facets (126, 526, 626, 626') facing the two pavilion main facets (142, 144, 146, 342, 344, 346, 542, 544, 546, 642, 642', 644, 646) through the girdle (110, 210, 310, 410, 510, 610), and
the two pavilion main facets (142, 144, 146, 342, 344, 346, 542, 544, 546, 642, 642', 644, 646), the two crown main facets (126, 526, 626, 626') and the table facet (122, 522, 622) have a common plane vertical to all of them within them.

2. An oval-cut diamond (100, 200, 300, 400, 500, 600) as set forth on claim 1, wherein the central axis is disposed in a center of the long axis of the contour line of the girdle cross-section, and the circumscribed circle (147, 547, 647) circumscribes the contour line at both ends of the long axis.

3. An oval-cut diamond (100, 200, 300, 400, 500, 600) as set forth on claim 2, wherein each of the pavilion main facets (142, 144, 146, 342, 344, 346, 542, 544, 546, 642, 642', 644, 646) has opposite vertexes composed of a crossing point (148, 149, 150, 548, 549, 550, 648, 648', 649, 650) of each of the eight-dividing planes (170, 570, 670) with the circumscribed circle (147, 547, 647) and the bottom apex (162, 562, 662).

4. An oval-cut diamond (100, 200, 300, 400, 500, 600) as set forth on claim 3, wherein each of the pavilion main facets (142, 144, 146, 342, 344, 346, 542, 544, 546, 642, 642', 644, 646) has a substantially equal pavilion angle to the table facet (122, 522, 622).

5. An oval-cut diamond (100, 200, 300, 400, 500, 600) as set forth on claim 4, wherein a crown main facet (126, 526, 626, 626') that each of the pavilion main facets (142, 144, 146, 342, 344, 346, 542, 544, 546, 642, 642', 644, 646) having the substantially equal pavilion angle faces through the girdle (110, 210, 310, 410, 510, 610) has a substantially equal crown angle to the table facet (122, 522, 622).

6. An oval-cut diamond (100, 200, 300, 400, 500, 600) as set forth on claim 5, wherein a pavilion angle to the table facet (122, 522, 622) each of the pavilion main facets (142, 144, 146, 342, 344, 346, 542, 544, 546, 642, 642', 644, 646) has and a crown angle to the table facet (122, 522, 622) each of the crown main facets (126, 526, 626, 626') has are in a region surrounded by lines connecting points (p, c): (43 degrees, 10 degrees), (41 degrees, 14 degrees), (37 degrees, 23 degrees), (35 degrees, 33 degrees), (35 degrees, 36 degrees), (37 degrees, 42 degrees), (39 degrees, 42 degrees), (41 degrees, 36 degrees), (43 degrees, 24 degrees) and (44.7 degrees, 9 degrees) on a graph drawn with pavilion angles (p) in a vertical line and crown angles (c) in a horizontal line.

7. An oval-cut diamond (300, 400, 500, 600) as set forth on claim 6, wherein the girdle (310, 410, 510, 610) has a substantially equal girdle height around a whole circumference of the girdle (310, 410, 510, 610), and six pavilion main facets (344, 346, 544, 546, 644, 646) excluding two pavilion main facets (342, 542, 642, 642') extending in a long axis direction from the bottom apex (562, 662) and lower girdle facets (352a, 352b, 352c, 552a, 552b, 552c, 652a, 652b, 652c) disposed between two neighboring pavilion main facets (344, 346, 544, 546, 644, 646) among the six pavilion main facets (344, 346, 544, 546, 644, 646) have adjusting facets (394, 396, 398a, 398b, 398c, 594, 596, 598a, 598b, 598c, 694, 696, 698a, 698b, 698c) between a respective facet and the girdle lower ridge having a larger angle to the table facet (122, 522, 622) than the pavilion angle and forming a ridge (398, 598, 698) between the respective facet and each of the adjusting facets (394, 396, 398a, 398b, 398c, 594, 596, 598a, 598b, 598c, 694, 696, 698a, 698b, 698c).

8. An oval-cut diamond (100, 200, 300, 400, 500, 600) as set forth on claim 1, wherein at least seven pavilion main facets (142, 144, 146, 342, 344, 346, 542, 544, 546, 642, 642', 644, 646) having opposite vertexes composed of a crossing point (148, 149, 150, 548, 549, 550, 648, 648', 649, 650) of each of the eight-dividing planes (170, 570, 670) with the circumscribed circle (147, 547, 647) and the bottom apex (162, 562, 662) have a substantially equal pavilion angle to the table facet (122, 522, 622).

9. An oval-cut diamond (100, 200, 300, 400, 500, 600) as set forth on claim 8, wherein a crown main facet (126, 526, 626, 626') that each of the pavilion main facets (142, 144, 146, 342, 344, 346, 542, 544, 546, 642, 642', 644, 646) having the substantially equal pavilion angle faces through the girdle (110, 210, 310, 410, 510, 610) has a substantially equal crown angle to the table facet (122, 522, 622).

10. An oval-cut diamond (100, 200, 300, 400, 500, 600) as set forth on claim 9, wherein a pavilion angle to the table facet (122, 522, 622) each of the pavilion main facets (142, 144, 146, 342, 344, 346, 542, 544, 546, 642, 642', 644, 646) has and a crown angle to the table facet (122, 522, 622) each of the crown main facets (126, 526, 626, 626') has are in a region surrounded by lines connecting points (p, c): (43 degrees, 10 degrees), (41 degrees, 14 degrees), (37 degrees, 23 degrees), (35 degrees, 33 degrees), (35 degrees, 36 degrees), (37 degrees, 42 degrees), (39 degrees, 42 degrees), (41 degrees, 36 degrees), (43 degrees, 24 degrees) and (44.7 degrees, 9 degrees) on a graph drawn with pavilion angles (p) in a vertical line and crown angles (c) in a horizontal line.

11. An oval-cut diamond (300, 400, 500, 600) as set forth on claim 10, wherein the girdle (310, 410, 510, 610) has a substantially equal girdle height around a whole circumference of the girdle (310, 410, 510, 610), and six pavilion main facets (344, 346, 544, 546, 644, 646) excluding two pavilion main facets (342, 542, 642, 642') extending in a long axis direction from the bottom apex (562, 662) and lower girdle facets (352a, 352b, 352c, 552a, 552b, 552c, 652a, 652b, 652c) disposed between two neighboring pavilion main facets (344, 346, 544, 546, 644, 646) among the six pavilion main facets (344, 346, 544, 546, 644, 646) have adjusting facets (394, 396, 398a, 398b, 398c, 594, 596, 598a, 598b, 598c, 694, 696, 698a, 698b, 698c) between a respective facet and the girdle lower ridge having a larger angle to the table facet (122, 522, 622) than the pavilion angle and forming a ridge (398, 598, 698) between the respective facet and each of the adjusting facets (394, 396, 398a, 398b, 398c, 594, 596, 598a, 598b, 598c, 694, 696, 698a, 698b, 698c).

12. An oval-cut diamond (100, 200, 300, 400) as set forth on claim 1, wherein the contour line of the girdle cross-section parallel to the table (122) is oval.

13. An oval-cut diamond (500) as set forth on claim 1, wherein the contour line of the girdle cross-section parallel to the table (522) is in a shape of two oval sectors (505, 505') crossing each other.

14. An oval-cut diamond (600) as set forth on claim 1, wherein the contour line of the girdle cross-section parallel to the table (622) is in a shape of three oval sectors (604, 605, 605') crossing each other.

## Patentansprüche

1. Diamant (100, 200, 300, 400, 500, 600) mit ovalem Schliff, umfassend eine säulenartige Rundiste (110, 210, 310, 410, 510, 610), ein Oberteil (120, 520, 620), das oberhalb der Rundiste (110, 210, 310, 410, 510, 610) bereitgestellt ist und eine achteckige Tafelfacette (122, 522, 622) an einer Oberseite des Oberteils (120, 520, 620) hat, und ein Unterteil (140, 340, 540, 640), das unterhalb der Rundiste (110, 210, 310, 410, 510, 610) bereitgestellt ist,
wobei die Rundiste (110, 210, 310, 410, 510, 610) zwischen dem Oberteil (120, 520, 620) und der Rundiste (110, 210, 310, 410, 510, 610) einen oberen Grat, zwischen dem Unterteil (140, 340, 540, 640) und der Rundiste (110, 210, 310, 410, 510, 610) einen unteren Grat und eine Konturlinie eines Rundistenquerschnitts, parallel zu der Tafelfacette (122, 522, 622), hat, die eine ovale oder ovalartige Form hat,
wobei der Diamant (100, 200, 300, 400, 500, 600) Folgendes hat:
eine zentrale Ebene, die eine lange Achse der Konturlinie enthält und eine zu der Tafelfacette (122, 522, 622) senkrechte Ebene ist,
eine gerade Mittelachse, die die Tafelfacette (122, 522, 622) in der zentralen Ebene vertikal durchquert,
und
acht Trennungsebenen (170, 570, 670), die sich aus der zentralen Ebene, einer Ebene, die eine kurze Achse der Konturlinie des Rundistenquerschnitts und die Mittelachse enthält, und Ebenen, die einen Winkel um die Mittelachse zwischen der Ebene, welche die kurze Achse und die Mittelachse enthält, und der zentralen Ebene gleichmäßig zweiteilen, zusammensetzen;
wobei die Tafelfacette (122, 522, 622) zwei entgegengesetzte Spitzen (123, 523, 623, 623') in der zentralen Ebene und sechs zu der zentralen Ebene symmetrische Spitzen (124, 125, 524, 525, 624, 625) hat,
wobei das Oberteil (120, 520, 620) acht viereckige Oberteilhauptfacetten (126, 526, 626, 626'), acht dreieckige Sternfacetten (132, 532, 632) und sechzehn obere Rundistenfacetten (136, 536, 636) an einem Diamantenumfang zwischen dem oberen Rundistengrat und der Tafelfacette (122, 522, 622) hat,
wobei jede der Oberteilhauptfacetten (126, 526, 626, 626') ein Viereck ist, das zwei entgegengesetzte Spitzen hat, die von einem Punkt (127, 128, 129, 527, 528, 529, 627, 627', 628, 629) gebildet werden, an dem jede der acht Trennungsebenen (170, 570, 670) den oberen Rundistengrat kreuzt, und jede Spitze (123, 124, 125, 523, 524, 525, 623, 623', 624, 625) der Tafelfacette (122, 522, 622) und andere Spitzen (121, 521, 621), die jeweils auch zu jeder von zwei anderen Oberteilhauptfacetten (126, 526, 626, 626') gehören, an die Oberteilhauptfacette (126, 526, 626, 626') angrenzen,
jede der Sternfacetten (132, 532, 632) ein Dreieck ist, das eine Unterseite, die mit jeder Seite (123-125, 523-525, 623-625) der Tafelfacette (122, 522, 622) koinzidiert, und eine entgegengesetzte Spitze hat, die mit jeder der anderen Spitzen (121, 521, 621) koinzidiert, die jeweils auch zu zwei angrenzenden Oberteilhauptfacetten (126, 526, 626, 626') gehören, die jeweils eine Spitze (123, 125, 523, 525, 623, 625) an jedem Ende der Unterseite (123-125, 523-525, 623-625) haben, und
jede der oberen Rundistenfacetten (136, 536, 636) ein Dreieck oder ein ovaler Sektor mit einer Unterseite, die mit einer Seite (127-121, 527-521, 627-621) koinzidiert, deren Ende (127, 527, 627) an dem oberen Rundistengrat unter Seiten der Oberteilhauptfacetten (126, 526, 626, 626') ist, und einer Spitze (138, 538, 638) an dem oberen Rundistengrat ist;
wobei das Unterteil (140, 340, 540, 640) einen unteren Scheitelpunkt (162, 562, 662) an einem unteren Ende der Mittelachse und acht Unterteilhauptfacetten (142, 144, 146, 342, 344, 346, 542, 544, 546, 642, 642', 644, 646) und sechzehn untere Rundistenfacetten (152, 352, 352a, 352b, 352c, 552, 552a, 552b, 552c, 652, 652a, 652b, 652c) an dem Diamantenumfang zwischen dem unteren Scheitelpunkt (162, 562, 662) und dem unteren Rundistengrat hat,
wobei jede der Unterteilhauptfacetten (142, 144, 146, 342, 344, 346, 542, 544, 546, 642, 642', 644, 646) ein Viereck oder Teil eines Vierecks ist, das sich von dem unteren Scheitelpunkt (162, 562, 662) in Richtung auf einen Kreuzungspunkt von jeder der acht Trennungsebenen (170, 570, 670) mit dem unteren Rundistengrat an dem Diamantenumfang zwischen dem unteren Scheitelpunkt (162, 562, 662) und dem unteren Rundistengrat erstreckt und eine Seite (186, 586, 686) hat, deren Ende mit dem unteren Scheitelpunkt (162, 562, 662) koinzidiert, welche jeweils auch zu jeder von zwei anderen Unterteilhauptfacetten (142, 144, 146, 342, 344, 346, 542, 544, 546, 642, 642', 644, 646) gehört, die an die Unterteilhauptfacette (142, 144, 146, 342, 344, 346, 542, 544, 546, 642, 642', 644, 646) angrenzen,
jede der zwischen den Unterteilhauptfacetten (142, 144, 146, 342, 344, 346, 542, 544, 546, 642, 642', 644, 646) und dem unteren Rundistengrat gebildeten unteren Rundistenfacetten (152, 352, 352a, 352b, 352c, 552, 552a, 552b, 552c, 652, 652a, 652b, 652c) ein Dreieck oder ein ovaler Sektor mit einer Unterseite, die mit einer Seite (148-187, 548-587, 648-687) koinzidiert, die an dem unteren Rundistengrat ein Ende unter Seiten jeder der Unterteilhauptfacetten (142, 144, 146, 342, 344, 346, 542, 544, 546, 642, 642', 644, 646) hat, und einer Spitze (154, 554, 654) an dem unteren Rundistengrat ist,
und
jede der unteren Rundistenfacetten (152, 352, 352a, 352b, 352c, 552, 552a, 552b, 552c, 652, 652a, 652b, 652c) an jeder von beiden Seiten von jeder der Unterteilhauptfacetten (142, 144, 146, 342, 344, 346, 542, 544, 546, 642, 642', 644, 646) angeordnet ist;
**dadurch gekennzeichnet, dass** die von der Konturlinie des Rundistenquerschnitts gebildete ovale oder ovalartige Form ein Verhältnis eines kurzen Radius zu einem langen Radius (b/a) von 0,6 oder mehr hat, bei dem ein Radius in einer Richtung der langen Achse der Form (im Folgenden "langer Radius" genannt) mit "a" bezeichnet wird, und ein Radius in einer Richtung der kurzen Achse der Form (im Folgenden "kurzer Radius" genannt) mit "b" bezeichnet wird,
dass der Diamant (100, 200, 300, 400, 500, 600) einen umschriebenen Kreis (147, 547, 647) hat, der seine Mitte auf der Mittelachse hat und die Konturlinie an einem Ende der langen Achse umschreibt, dass jede von wenigstens sieben Unterteilhauptfacetten (142, 144, 146, 342, 344, 346, 542, 544, 546, 642, 642', 644, 646) unter den
Unterteilhauptfacetten (142, 144, 146, 342, 344, 346, 542, 544, 546, 642, 642', 644, 646) mit entgegengesetzten Spitzen ausgebildet ist, die von einem Kreuzungspunkt (148, 149, 150, 548, 549, 550, 648, 648', 649, 650) von jeder der acht Trennungsebenen (170, 570, 670) mit dem umschriebenen Kreis (147, 547, 647) und dem unteren Scheitelpunkt (162, 562, 662) gebildet werden, und
dass jedes Paar von vier Paaren von Unterteilhauptfacetten (142, 144, 146, 342, 344, 346, 542, 544, 546, 642, 642', 644, 646), von denen jedes Paar von zwei Unterteilhauptfacetten (142, 144, 146, 342, 344, 346, 542, 544, 546, 642, 642', 644, 646) gebildet wird, die einander in Bezug auf die Mittelachse entgegengesetzt positioniert sind, zwei Oberteilhauptfacetten (126, 526, 626, 626') hat, die den zwei Unterteilhauptfacetten (142, 144, 146, 342, 344, 346, 542, 544, 546, 642, 642', 644, 646) durch die Rundiste (110, 210, 310, 410, 510, 610) gegenüber liegen, und die zwei Unterteilhauptfacetten (142, 144, 146, 342, 344, 346, 542, 544, 546, 642, 642', 644, 646), die zwei Oberteilhauptfacetten (126, 526, 626, 626') und die Tafelfacette (122, 522, 622) eine gemeinsame, zu ihnen allen vertikale Ebene in sich haben.

2. Diamant mit ovalem Schliff (100, 200, 300, 400, 500, 600) nach Anspruch 1, bei dem die Mittelachse in einer Mitte der langen Achse der Konturlinie des Rundistenquerschnitts angeordnet ist und der umschriebene Kreis (147, 547, 647) die Konturlinie an beiden Enden der langen Achse umschreibt.

3. Diamant mit ovalem Schliff (100, 200, 300, 400, 500, 600) nach Anspruch 2, bei dem jede der Unterteilhauptfacetten (142, 144, 146, 342, 344, 346, 542, 544, 546, 642, 642', 644, 646) entgegengesetzte Spitzen hat, die von einem Kreuzungspunkt (148, 149, 150, 548, 549, 550, 648, 648', 649, 650) von jeder der acht Trennungsebenen (170, 570, 670) mit dem umschriebenen Kreis (147, 547, 647) und dem unteren Scheitelpunkt (162, 562, 662) gebildet werden.

4. Diamant mit ovalem Schliff (100, 200, 300, 400, 500, 600) nach Anspruch 3, bei dem jede der Unterteilhauptfacetten (142, 144, 146, 342, 344, 346, 542, 544, 546, 642, 642', 644, 646) einen im Wesentlichen gleichen Unterteilwinkel zu der Tafelfacette (122, 522, 622) hat.

5. Diamant mit ovalem Schliff (100, 200, 300, 400, 500, 600) nach Anspruch 4, bei dem eine Oberteilhauptfacette (126, 526, 626, 626'), der jede der Unterteilhauptfacetten (142, 144, 146, 342, 344, 346, 542, 544, 546, 642, 642', 644, 646) mit dem im Wesentlichen gleichen Unterteilwinkel durch die Rundiste (110, 210, 310, 410, 510, 610) gegenüberliegt, einen im Wesentlichen gleichen Oberteilwinkel zu der Tafelfacette (122, 522, 622) hat.

6. Diamant mit ovalem Schliff (100, 200, 300, 400, 500, 600) nach Anspruch 5, bei dem ein Unterteilwinkel zu der Tafelfacette (122, 522, 622), den jede der Unterteilhauptfacetten (142, 144, 146, 342, 344, 346, 542, 544, 546, 642, 642', 644, 646) hat, und ein Oberteilwinkel zu der Tafelfacette (122, 522, 622), den jede der Oberteilhauptfacetten (126, 526, 626, 626') hat, in einer Region sind, die von Linien umgeben ist, die Punkte (p, c) (43 Grad, 10 Grad), (41 Grad, 14 Grad), (37 Grad, 23 Grad), (35 Grad, 33 Grad), (35 Grad, 36 Grad), (37 Grad, 42 Grad), (39 Grad, 42 Grad), (41 Grad, 36 Grad), (43 Grad, 24 Grad) und 44,7 Grad, 9 Grad) auf einer Kurve verbinden, die mit Unterteilwinkeln (p) in einer vertikalen Linie und Oberteilwinkeln (c) in einer horizontalen Linie gezogen ist.

7. Diamant mit ovalem Schliff (300, 400, 500, 600) nach Anspruch 6, bei dem die Rundiste (310, 410, 510, 610) um den gesamten Umfang der Rundiste (310, 410, 510, 610) eine im Wesentlichen gleiche Rundistenhöhe hat und sechs Unterteilhauptfacetten (344, 346, 544, 546, 644, 646) ausschließlich zwei Unterteilhauptfacetten (342, 542, 642, 642'), die in der Richtung der langen Achse von dem unteren Scheitelpunkt (562, 662) verlaufen, und untere Rundistenfacetten (352a, 352b, 352c, 552a, 552b, 552c, 652a, 652b, 652c), die zwischen zwei benachbarten Unterteilhauptfacetten (344, 346, 544, 546, 644, 646) unter den sechs Unterteilhauptfacetten (344, 346, 544, 546, 644, 646) angeordnet sind, anpassende Facetten (394, 396, 398a, 398b, 398c, 594, 596, 598a, 598b, 598c, 694, 696, 698a, 698b, 698c) zwischen einer jeweiligen Facette und dem unteren Rundistengrat haben, die einen größeren Winkel zu der Tafelfacette (122, 522, 622) als den Unterteilwinkel haben und einen Grat (398, 598, 698) zwischen der jeweiligen Facette und jeder der anpassenden Facetten (394, 396, 398a, 398b, 398c, 594, 596, 598a, 598b, 598c, 694, 696, 698a, 698b, 698c) bilden.

8. Diamant mit ovalem Schliff (100, 200, 300, 400, 500, 600) nach Anspruch 1, bei dem wenigstens sieben Unterteilhauptfacetten (142, 144, 146, 342, 344, 346, 542, 544, 546, 642, 642', 644, 646) mit entgegengesetzten Spitzen, die von einem Kreuzungspunkt (148, 149, 150, 548, 549, 550, 648, 648', 649, 650) von jeder der acht Trennungsebenen (170, 570, 670) mit dem umschriebenen Kreis (147, 547, 647) und dem unteren Scheitelpunkt (162, 562, 662) gebildet werden, einen im Wesentlichen gleichen Unterteilwinkel zu der Tafelfacette (122, 522, 622) haben.

9. Diamant mit ovalem Schliff (100, 200, 300, 400, 500, 600) nach Anspruch 8, bei dem eine Oberteilhauptfacette (126, 526, 626, 262'), der jede der Unterteilhauptfacetten (142, 144, 146, 342, 344, 346, 542, 544, 546, 642, 642', 644, 646) mit dem im Wesentlichen gleichen Unterteilwinkel durch die Rundiste (110, 210, 310, 410, 510, 610) gegenüberliegt, einen im Wesentlichen gleichen Oberteilwinkel zu der Tafelfacette (122, 522, 622) hat.

10. Diamant mit ovalem Schliff (100, 200, 300, 400, 500, 600) nach Anspruch 9, bei dem ein Unterteilwinkel zu der Tafelfacette (122, 522, 622), den jede der Unterteilhauptfacetten (142, 144, 146, 342, 344, 346, 542, 544, 546, 642, 642', 644, 646) hat, und ein Oberteilwinkel zu der Tafelfacette (122, 522, 622), den jede der Oberteilhauptfacetten (126, 526, 626, 626') hat, in einer Region sind, die von Linien umgeben ist, die Punkte (p, c) (43 Grad, 10 Grad), (41 Grad, 14 Grad), (37 Grad, 23 Grad), (35 Grad, 33 Grad), (35 Grad, 36 Grad), (37 Grad, 42 Grad), (39 Grad, 42 Grad), (41 Grad, 36 Grad), (43 Grad, 24 Grad) und 44,7 Grad, 9 Grad) auf einer Kurve verbinden, die mit Unterteilwinkeln (p) in einer vertikalen Linie und Oberteilwinkeln (c) in einer horizontalen Linie gezogen ist.

11. Diamant mit ovalem Schliff (300, 400, 500, 600) nach Anspruch 10, bei dem die Rundiste (310, 410, 510, 610) um den gesamten Umfang der Rundiste (310, 410, 510, 610) eine im Wesentlichen gleiche Rundistenhöhe hat und sechs Unterteilhauptfacetten (344, 346, 544, 546, 644, 646) ausschließlich zwei Unterteilhauptfacetten (342, 542, 642, 642'), die in der Richtung der langen Achse von dem unteren Scheitelpunkt (562, 662) verlaufen, und untere Rundistenfacetten (352a, 352b, 352c, 552a, 552b, 552c, 652a, 652b, 652c), die zwischen zwei benachbarten Unterteilhauptfacetten (344, 346, 544, 546, 644, 646) unter den sechs Unterteilhauptfacetten (344, 346, 544, 546, 644, 646) angeordnet sind, anpassende Facetten (394, 396, 398a, 398b, 398c, 594, 596, 598a, 598b, 598c, 694, 696, 698a, 698b, 698c) zwischen einer jeweiligen Facette und dem unteren Rundistengrat haben, die einen größeren Winkel zu der Tafelfacette (122, 522, 622) als der Unterteilwinkel haben und einen Grat (398, 598, 698) zwischen der jeweiligen Facette und jeder der anpassenden Facetten (394, 396, 398a, 398b, 398c, 594, 596, 598a, 598b, 598c, 694, 696, 698a, 698b, 698c) bilden.

12. Diamant mit ovalem Schliff (100, 200, 300, 400) nach Anspruch 1, bei dem die Konturlinie des Rundistenquerschnitts parallel zu der Tafel (122) oval ist.

13. Diamant mit ovalem Schliff (500) nach Anspruch 1, bei dem die Konturlinie des Rundistenquerschnitts parallel zu der Tafel (522) die Form von zwei einander kreuzenden ovalen Sektoren (505, 505') hat.

14. Diamant mit ovalem Schliff (600) nach Anspruch 1, bei dem die Konturlinie des Rundistenquerschnitts parallel zu der Tafel (622) die Form von drei einander kreuzenden ovalen Sektoren (604, 605, 605') hat.

## Revendications

1. Diamant de coupe ovale (100, 200, 300, 400, 500, 600) comprenant un rondiste en colonnes (110, 210, 310, 410, 510, 610), une couronne (120, 520, 620) disposée au-dessus du rondiste (110, 210, 310, 410, 510, 610) et ayant une facette de table octogonale (122, 522, 622) sur un dessus de la couronne (120, 520, 620) et une culasse (140, 340, 540, 640) disposée en dessous du rondiste (110, 210, 310, 410, 510, 610) ;
le rondiste (110, 210, 310, 410, 510, 610) ayant un bord supérieur entre la couronne (120, 520, 620) et le rondiste (110, 210, 310, 410, 510, 610), un bord inférieur entre la culasse (140, 340, 540, 640) et le rondiste (110, 210, 310, 410, 510, 610) et une ligne de contour d'une coupe transversale de rondiste, parallèle à la facette de table (122, 522, 622) étant de forme ovale ou du type ovale ;
le diamant (100, 200, 300, 400, 500, 600) ayant :
un plan central contenant un axe long de la ligne de contour et étant un plan vertical à la facette de table (122, 522, 622),
un axe central droit traversant verticalement la facette de table (122, 522, 622) sur le plan central,
et
huit plans de division (170, 570, 670) composés du plan central, d'un plan contenant un axe court de la ligne de contour de la coupe transversale du rondiste et l'axe central et des plans divisant un angle autour de l'axe central entre le plan contenant l'axe court et l'axe central et le plan central en deux parties égales ;
la facette de table (122, 522, 622) ayant deux sommets opposés (123, 523, 623, 623') sur le plan central et six sommets (124, 125, 524, 525, 624, 625) symétriques par rapport au plan central ;
la couronne (120, 520, 620) ayant huit facettes principales de couronne tétragonales (126, 526, 626, 626'), huit facettes en étoile triangulaires (132, 532, 632) et seize haléfis supérieurs (136, 536, 636) sur une circonférence de diamant entre le bord supérieur du rondiste et la facette de table (122, 522, 622) ;
dans laquelle chacune des facettes principales de couronne (126, 526, 626, 626') est un tétragone ayant deux sommets opposés composés d'un point (127, 128, 129, 527, 528, 529, 627, 627', 628, 629), auquel chacun des huit plans de division (170, 570, 670) croise le bord supérieur du rondiste, et chaque sommet (123, 124, 125, 523, 524, 525, 623, 623', 624, 625) de la facette de table (122, 522, 622), et d'autres sommets (121, 521, 621) chacun appartenant conjointement à chacune de deux autres facettes principales de couronne (126, 526, 626, 626') voisines sur la facette principale de couronne (126, 526, 626, 626') ;
chacune des facettes en étoile (132, 532, 632) est un triangle ayant un côté inférieur qui coïncide avec chaque côté (123- 125, 523-525, 623-625) de la facette de table (122, 522, 622) et un sommet opposé coïncidant avec chacun des autres sommets (121, 521, 621) appartenant conjointement à deux facettes principales de couronne voisines (126, 526, 626, 626') ayant chacune un sommet (123, 125, 523, 525, 623, 625) à chaque extrémité du côté inférieur (123-125, 523-525, 623-625) ; et
chacune des haléfis supérieurs (136, 526, 636) est un triangle ou un secteur ovale ayant un côté inférieur qui coïncide avec un côté (127-121, 527-521, 627-621), dont l'extrémité (127, 527, 627) se trouve sur un bord supérieur du rondiste, parmi des côtés des facettes principales de couronne (126, 526, 626, 626') et un sommet (138, 538, 638) sur le bord supérieur du rondiste ;
la culasse (140, 340, 540, 640) ayant une colette (162, 562, 662) à une extrémité inférieure de l'axe central, et huit facettes principales de culasse (142, 144, 146, 342, 344, 346, 542, 544, 546, 642, 642', 644, 646) et seize haléfis inférieurs (152, 352, 352a, 352b, 352c, 552, 552a, 552b, 552c, 652, 652a, 652b, 652c) sur la circonférence du diamant entre la colette (162, 562, 662) et le bord inférieur du rondiste ;
dans laquelle chacune des facettes principales de culasse (142, 144, 146, 342, 344, 346, 542, 544, 546, 642, 642', 644, 646) est un tétragone ou une partie d'un tétragone s'étendant depuis la colette (162, 562, 662) vers un point de croisement de chacun des huit plans de division (170, 570, 670) avec le bord inférieur du rondiste sur la circonférence du diamant entre la colette (162, 562, 662) et le bord inférieur du rondiste, et ayant un côté (186, 586, 686), dont l'extrémité coïncide avec la colette (162, 562, 662), appartenant conjointement à chacune de deux autres facettes principales de culasse (142, 144, 146, 342, 344, 346, 542, 544, 546, 642, 642', 644, 646) voisines de la facette principale de culasse (142, 144, 146, 342, 344, 346, 542, 544, 546, 642, 642', 644, 646) ;
chacun des haléfis inférieurs (152, 352, 352a, 352b, 352c, 552, 552a, 552b, 552c, 652, 652a, 652b, 652c) formés entre les facettes principales de culasse (142, 144, 146, 342, 344, 346, 542, 544, 546, 642, 642', 644, 646) et le bord inférieur du rondiste est un secteur triangulaire ou ovale ayant un côté inférieur qui coïncide avec un côté (148-187, 548-587, 648-687) ayant une extrémité sur le bord inférieur du rondiste parmi des côtés de chacune des facettes principales de culasse (142, 144, 146, 342, 344, 346, 542, 544, 546, 642, 642', 644, 646) et un sommet (154, 544, 654) sur le bord inférieur du rondiste ; et
chacun des haléfis inférieurs (152, 352, 352a, 352b, 352c, 552, 552a, 552b, 552c, 652, 652a, 652b, 652c) est disposé sur chacun des deux côtés de chacune des facettes principales de culasse (142, 144, 146, 342, 344, 346, 542, 544, 546, 642, 642', 644, 646) ;
**caractérisé en ce que** la forme ovale ou de type ovale formée par la ligne de contour de la coupe transversale de rondiste a un rapport de rayon court sur rayon long (b/a) de 0,6 ou plus, un rayon dans un sens d'axe long de la forme (appelé ci-après "rayon long") étant désigné par "a", et un rayon dans un sens d'axe court de la forme (appelé ci-après "rayon court") étant désigné par "b",
**en ce que** le diamant (100, 200, 300, 400, 500, 600) a un cercle circonscrit (147, 547, 647) ayant un centre sur l'axe central et circonscrivant la ligne de contour à une extrémité de l'axe long, **en ce que** chacune des au moins sept facettes principales de culasse (142, 144, 146, 342, 344, 346, 542, 544, 546, 642, 642', 644, 646) parmi les facettes principales de culasse (152, 352, 352a, 352b, 352c, 552, 552a, 552b, 552c, 652, 652a, 652b, 652c) est formée avec des sommets opposés composés d'un point de croisement (148, 149, 150, 548, 549, 550, 648, 648', 649, 650) de chacun des huit plans de division (170, 570, 670) avec le cercle circonscrit (147, 547, 647) et la colette (162, 562, 662) ; et
**en ce que** chaque paire des quatre facettes principales de culasse (142, 144, 146, 342, 344, 346, 542, 544, 546, 642, 642', 644, 646), dont chaque paire est composée de deux facettes principales de culasse (142, 144, 146, 342, 344, 346, 542, 544, 546, 642, 642', 644, 646) positionnées l'une en face de l'autre par rapport à l'axe central, comporte deux facettes principales de couronne (126, 526, 626, 626') faisant face aux deux facettes principales de culasse (142, 144, 146, 342, 344, 346, 542, 544, 546, 642, 642', 644, 646) à travers le rondiste (110, 210, 310, 410, 510, 610), et les deux facettes principales de culasse (142, 144, 146, 342, 344, 346, 542, 544, 546, 642, 642', 644, 646), les deux facettes principales de couronne (126, 526, 626, 626') et la facette de table (122, 522, 622) comportent un plan vertical commun à toutes.

2. Diamant de forme ovale (100, 200, 300, 400, 500, 600) selon la revendication 1, dans lequel l'axe central est disposé dans un centre de l'axe long de la ligne de contour de la coupe transversale de rondiste, et le cercle circonscrit (147, 547, 647) circonscrit la ligne de contour aux deux extrémités de l'axe long.

3. Diamant de forme ovale (100, 200, 300, 400, 500, 600) selon la revendication 2, dans lequel chacune des facettes principales de culasse (142, 144, 146, 342, 344, 346, 542, 544, 546, 642, 642', 644, 646) a des sommets opposés composés d'un point de croisement (148, 149, 150, 548, 549, 550, 648, 648', 649, 650) de chacun des huit plans de division (170, 570, 670) avec le cercle circonscrit (147, 547, 647) et la colette (162, 562, 662).

4. Diamant de forme ovale (100, 200, 300, 400, 500, 600) selon la revendication 3, dans lequel les angles de culasse des facettes principales de culasse (142, 144, 146, 342, 344, 346, 542, 544, 546, 642, 642', 644, 646) avec la facette de table (122, 522, 622) sont sensiblement égaux.

5. Diamant de forme ovale (100, 200, 300, 400, 500, 600) selon la revendication 4, dans lequel une facette principale de couronne (126, 526, 626, 626') à laquelle fait face à travers le rondiste (110, 210, 310, 410, 510, 610) chacune des facettes principales de culasse (142, 144, 146, 342, 344, 346, 542, 544, 546, 642, 642', 644, 646) à angle de culasse sensiblement égal a un angle de couronne avec la facette de table (122, 522, 622) sensiblement égal.

6. Diamant de forme ovale (100, 200, 300, 400, 500, 600) selon la revendication 5, dans lequel un angle de culasse que chacune des facettes principales de culasse (142, 144, 146, 342, 344, 346, 542, 544, 546, 642, 642', 644, 646) a avec la facette de table (122, 522, 622) et un angle de couronne que chacune des facettes principales de couronne (126, 526, 626, 626') a avec la facette de table (122, 522, 622) se trouvent dans une région entourée par des droites reliant des points (p, c) : (43 degrés, 10 degrés), (41 degrés, 14 degrés), (37 degrés, 23 degrés), (35 degrés, 33 degrés), (35 degrés, 36 degrés), (37 degrés, 42 degrés), (39 degrés, 42 degrés), (41 degrés, 36 degrés), (43 degrés, 24 degrés) et (44,7 degrés, 9 degrés) sur un graphique dessiné avec des angles de culasse (p) en ordonnée et les angles de couronne (c) en abscisse.

7. Diamant de forme ovale (100, 200, 300, 400, 500, 600) selon la revendication 6, dans lequel le rondiste (310, 410, 510, 610) a une hauteur de rondiste sensiblement égale autour d'une circonférence complète du rondiste (310, 410, 510, 610), et six facettes principales de culasse (344, 346, 544, 546, 644, 646) sauf deux facettes principales de culasse (342, 542, 642, 642') s'étendant dans un sens d'axe long depuis la colette (562, 662) et les haléfis inférieurs (352a, 352b, 352c, 552a, 552b, 552c, 652a, 652b, 652c) disposés entre deux facettes principales de culasse voisines (344, 346, 544, 546, 644, 646) parmi les six facettes principales de culasse (344, 346, 544, 546, 644, 646) ont des facettes d'ajustage (394, 396, 398a, 398b, 398c, 594, 596, 598a, 598b, 598c, 694, 696, 698a, 698b, 698c) entre une facette respective et le bord inférieur du rondiste ayant un plus grand angle avec la facette de table (122, 522, 622) que l'angle de culasse et formant un bord (398, 598, 698) entre la facette respective et chacune des facettes d'ajustage (394, 396, 398a, 398b, 398c, 594, 596, 598a, 598b, 598c, 694, 696, 698a, 698b, 698c).

8. Diamant de forme ovale (100, 200, 300, 400, 500, 600) selon la revendication 1, dans lequel les angles de culasse avec la facette de table (122, 522, 622) d'au moins sept des facettes principales de culasse (142, 144, 146, 342, 344, 346, 542, 544, 546, 642, 642', 644, 646) ayant des sommets opposés composés d'un point de croisement (148, 149, 150, 548, 549, 550, 648, 648', 649, 650) de chacun des huit plans de division (170, 570, 670) avec le cercle circonscrit (147, 547, 647) et la colette (162, 562, 662) sont sensiblement égaux.

9. Diamant de forme ovale (100, 200, 300, 400, 500, 600) selon la revendication 8, dans lequel une facette principale de couronne (126, 526, 626, 626') à laquelle fait face à travers le rondiste (110, 210, 310, 410, 510, 610) chacune des facettes principales de culasse (142, 144, 146, 342, 344, 346, 542, 544, 546, 642, 642', 644, 646) à angle de culasse sensiblement égal a un angle de couronne avec la facette de table (122, 522, 622) sensiblement égal.

10. Diamant de forme ovale (100, 200, 300, 400, 500, 600) selon la revendication 9, dans lequel un angle de culasse que chacune des facettes principales de culasse (142, 144, 146, 342, 344, 346, 542, 544, 546, 642, 642', 644, 646) a avec la facette de table (122, 522, 622) et un angle de couronne que chacune des facettes principales de couronne (126, 526, 626, 626') a avec la facette de table (122, 522, 622) se trouvent dans une région entourée par des droites reliant des points (p, c) : (43 degrés, 10 degrés), (41 degrés, 14 degrés), (37 degrés, 23 degrés), (35 degrés, 33 degrés), (35 degrés, 36 degrés), (37 degrés, 42 degrés), (39 degrés, 42 degrés), (41 degrés, 36 degrés), (43 degrés, 24 degrés) et (44,7 degrés, 9 degrés) sur un graphique dessiné avec des angles de culasse (p) en ordonnée et les angles de couronne (c) en abscisse.

11. Diamant de forme ovale (100, 200, 300, 400, 500, 600) selon la revendication 10, dans lequel le rondiste (310, 410, 510, 610) a une hauteur de rondiste sensiblement égale autour d'une circonférence complète du rondiste (310, 410, 510, 610), et six facettes principales de culasse (344, 346, 544, 546, 644, 646) sauf deux facettes principales de culasse (342, 542, 642, 642') s'étendant dans un sens d'axe long depuis la colette (562, 662) et les haléfis inférieurs (352a, 352b, 352c, 552a, 552b, 552c, 652a, 652b, 652c) disposés entre deux facettes principales de culasse voisines (344, 346, 544, 546, 644, 646-parmi les six facettes principales de culasse (344, 346, 544, 546, 644, 646) ont des facettes d'ajustage (394, 396, 398a, 398b, 398c, 594, 596, 598a, 598b, 598c, 694, 696, 698a, 698b, 698c) entre une facette respective et le bord inférieur du rondiste ayant un plus grand angle avec la facette de table (122, 522, 622) que l'angle de culasse et formant un bord (398, 598 698) entre la facette respective et chacune des facettes d'ajustage (394, 396, 398a, 398b, 398c, 594, 596, 598a, 598b, 598c, 694, 696, 698a, 698b, 698c).

12. Diamant de forme ovale (100, 200, 300, 400 selon la revendication 1, dans lequel la ligne de contour de la section transversale de rondiste parallèle à la table (122) est ovale.

13. Diamant de forme ovale (500) selon la revendication 1, dans lequel la ligne de contour de la section transversale de rondiste parallèle à la table (522) a la forme de deux secteurs ovales (505, 505') qui se croisent.

14. Diamant de forme ovale (600) selon la revendication 1, dans lequel la ligne de contour de la section transversale de rondiste parallèle à la table (622) a la forme de trois secteurs ovales (604, 605, 605') qui se croisent.
